(19) Europäisches Patentamt
European Patent Office
Office européen des brevets

(11) **EP 2 546 771 A2**

(12) **EUROPEAN PATENT APPLICATION**

(43) Date of publication:
**16.01.2013 Bulletin 2013/03**

(51) Int Cl.:
**G06F 17/50** (2006.01)   **G01R 21/00** (2006.01)
**H05K 7/20** (2006.01)   **G06F 1/26** (2006.01)

(21) Application number: **12188034.8**

(22) Date of filing: **29.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.10.2007 US 983393 P**

(62) Document number(s) of the earlier application(s) in accordance with Art. 76 EPC:
**08845958.1 / 2 215 573**

(71) Applicant: **American Power Conversion Corporation**
**West Kingston, RI 02892 (US)**

(72) Inventor: **Rasmussen, Neil**
**Concord, MA Massachusetts 01742 (US)**

(74) Representative: **Hewett, Jonathan Michael Richard et al**
**Venner Shipley LLP**
**200 Aldersgate**
**London EC1A 4HD (GB)**

Remarks:
This application was filed on 10-10-2012 as a divisional application to the application mentioned under INID code 62.

(54) **Electrical efficiency measurement for data centers**

(57)   A method of managing power efficiency of a data center includes conducting initial power measurements at a plurality of locations in the data center, establishing an efficiency model for the data center based on the initial power measurements, establishing benchmark performance levels using the efficiency model, conducting ongoing power measurements, and comparing results of the ongoing power measurements to benchmark per- formance levels. Other methods and systems of manag- ing power efficiency and modeling power efficiency are further disclosed.

FIG. 1

**Description**

BACKGROUND OF THE DISCLOSURE

The present disclosure relates generally to methods and systems for improving the electrical efficiency of a data center.

Although certain aspects of data centers are well planned, data center electrical efficiency is rarely planned or managed. An unfortunate result is that most data centers waste substantial amounts of electricity. It is therefore desirable to improve the electrical efficiency of a data center by planning, measuring and modeling data center efficiency. In addition to reducing electrical consumption, efficiency improvements can gain users higher IT power densities and the ability to install more IT equipment in a given installation.

SUMMARY OF THE DISCLOSURE

At lease some embodiments of the disclosure are directed to measuring, evaluating and improving data center efficiency.

At least one aspect of the disclosure is directed to a method of managing power efficiency of a data center. In one embodiment, the method comprises: conducting initial power measurements at a plurality of locations in the data center; establishing an efficiency model for the data center based on the initial power measurements; establishing benchmark performance levels using the efficiency model; conducting ongoing power measurements; and comparing results of the ongoing power measurements to benchmark performance levels.

In the method, conducting ongoing power measurements may include using a processor based data center management system in conjunction with measurement equipment. The method may further comprise providing a warning if the results of the ongoing power measurements differ from the benchmark performance levels by greater than a specified amount. Establishing an efficiency model may include using data related to climate associated with a location of the data center to establish the efficiency model. In another embodiment, establishing an efficiency module may include identifying devices used in the data center that draw power, for each device, selecting one of a rated capacity and a usable capacity for a power input of the device, and for each device, determining whether the device contributes as a fixed loss, a proportional loss, or a square-law loss, or a combination thereof. In a further embodiment, establishing an efficiency module may further include aggregating power losses of the devices to obtain a subsystem loss, and/or aggregating power losses of the subsystems to obtain a data center loss.

Another aspect of the disclosure is directed to a data center management system for managing power efficiency of a data center comprising a data center manager having at least one processor programmed to perform the following: receive data related to initial power measurements at a plurality of locations in the data center; establish an efficiency model for the data center based on the data related to initial power measurements; establish benchmark performance levels using the efficiency model; receive data related to ongoing power measurements; and compare results of the ongoing power measurements to benchmark performance levels.

In the system, conducting ongoing power measurements includes communicating with power measurement devices over at least one network. In one embodiment, the at least one processor is programmed to provide a warning if the results of the ongoing power measurements differ from the benchmark performance levels by greater than a specified amount. Establishing an efficiency model may include using data related to climate associated with a location of the data center to establish the efficiency model.

A further aspect of the disclosure is directed to a method of modeling power efficiency of a data center comprising: measuring a power input into the data center; measuring power loads in the data center; and measuring cooling loads in the data center.

In the method, in one embodiment, measuring the power loads includes measuring the loads of UPSs and PDUs. In another embodiment, measuring the cooling loads in the data center includes measuring loads generated by at least one of CRAH, CRAC, fan, chiller unit, ventilation unit, cooling tower, and pumps. The method may comprise measuring environmental conditions of the data center.

Yet another aspect is directed to a method of modeling power efficiency of a data center comprising: identifying devices used in the data center that draw power; for each device, selecting one of a rated capacity and a usable capacity for a power input of the device; and for each device, determining whether the device contributes as a fixed loss, a proportional loss, or a square-law loss, or a combination thereof.

Embodiments of the method may further include aggregating power losses of the devices to obtain a subsystem loss, and/or aggregating power losses of the subsystems to obtain a data center loss. The devices may be characterized as power-related devices and cooling-related devices. The method may further include identifying causes of losses other than from devices, and predicting the amount of loss from statistical data. In a certain embodiment, the method may further include providing a data center catalog including a majority of data center configurations, the data center catalog having a power catalog of exemplary power configurations and a cooling catalog of exemplary cooling configurations, and combining the power catalog and the cooling catalog to create a data center configuration. The method may further include simplifying the calculations for circular dependencies in the model.

Another aspect is directed to a data center management system for modeling power efficiency of a data center comprising: a data center manager having at least one processor programmed to perform the following: identify devices used in the data center that draw power; for each device, select one of a rated capacity and a usable capacity for a power input of the device; and for each device, determine whether the device contributes as a fixed loss, a proportional loss, or a square-law loss, or a combination thereof.

In the system, the at least one processor is programmed to aggregate power losses of the devices to obtain a subsystem loss, and/or programmed to aggregate power losses of the subsystems to obtain a data center loss.

A further aspect of the disclosure is directed to a computer readable medium having stored thereon sequences of instruction including instructions that will cause a processor to: identify devices used in the data center that draw power; for each device, select one of a rated capacity and a usable capacity for a power input of the device; and for each device, determine whether the device contributes as a fixed loss, a proportional loss, or a square-law loss, or a combination thereof.

BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:

FIG. 1 is a diagram showing power flow in a typical data center;
FIG. 2 is a graph showing data center efficiency as a function of IT load;
FIG. 3 is a graph showing data center efficiency as a function of IT load comparing modular and non-modular designs;
FIG. 4 is a graph showing data center efficiency as a function of outdoor temperature;
FIG. 5 is a graph showing data center efficiency as a function of the days of the week;
FIG. 6 is a graph showing data center efficiency identifying IT loads for two different data centers;
FIG. 7A is a diagram of a data center efficiency model showing energy flows of loads and losses;
FIG. 7B is a view of an example data center electrical efficiency assessment;
FIG. 8 is a diagram of an example power distribution system of a data center supplying IT loads;
FIG. 9 is a diagram of a framework of an exemplary data center design;
FIG. 10 is a view of power catalog entries of a known data center;
FIG. 11 is a view of cooling catalog entries of a known data center;
FIG. 12A is a diagram of a power system one-line energy flow for the data center with catalog entry "Power 1A;"
FIG. 12B is a diagram of a cooling system one-line energy flow for the data center with catalog entry "Cooling 2B;"
FIG. 13 is a diagram of a sample model evaluation flow for the data center with catalog entry "Power 1A, Cooling 2B;"
FIG. 14 is a portion of the diagram shown in FIG. 13 with circular energy flow highlighted;
FIGS. 15A and 15B are diagrams showing the relation between energy flow and model evaluation flow for two different types of devices;
FIG.16 shows a general-purpose computer system upon which various embodiments of the invention may be practiced;
FIG. 17 illustrates a storage device of a general-purpose computer system; and
FIG. 18 depicts a network of general-purpose computer systems.

DETAILED DESCRIPTION

Embodiments of the disclosure are not limited to the details of construction and the arrangement of components set forth in the following description or illustrated in the drawings. Embodiments of the disclosure are capable of being practiced or of being carried out in various ways. Also, the phraseology and terminology used herein is for the purpose of description and should not be regarded as limiting. The use of "including," "comprising," or "having," "containing," "involving", and variations thereof herein, is meant to encompass the items listed thereafter and equivalents thereof as well as additional items.

A 1MW high availability data center can consume $20,000,000 worth of electricity over its lifetime. It has been suggested that for some customers, the cost of electricity is greater than the cost of IT hardware. Additionally, many companies are beginning to consider the carbon consumption of their ongoing operations. Efficiency varies widely across similar data centers, and the actual efficiencies of most installations are well below the practical achievable best-in-class values.

Most data centers are designed and constructed without accounting for the electrical efficiency of the data center. It is difficult to control the problem of electrical inefficiency without data regarding the performance of the particular facility. In addition, even if data were available, there are no techniques to evaluate the data. Data center designers and managers do not know how to compare or benchmark the performance of a particular facility to the performance of other similar facilities. Such designers and managers do not have access to information to enable them to compare the actual data to the as-designed values they should have expected for their facilities.

In addition, customers do not have efficiency data, and even if they did, such customers do not know how to treat it. To solve this problem, embodiments of the disclosure will achieve the following: developing a standard language for describing data center efficiency; developing a standard method for measuring data center efficiency; developing a standard method for specifying data center efficiency; developing a standard method for analyzing data center efficiency and determining the contributors to inefficiency; benchmarking data relating to efficiency; and developing efficiency modeling tools to assess proposed improvements or alternate designs.

A number of different related metrics have been proposed and discussed for data center efficiency, including Data Center Infrastructure Efficiency (DCiE), Power Utilization Effectiveness (PUE), and Site-Power Overhead Multiplier (Site-POM). Data Center Infrastructure Efficiency (DCiE) is used primarily herein as the metric for determining the efficiency of a data center. The electrical efficiency of a data center is expressed as the fraction of the total electrical power supplied to the data center which ultimately is delivered to the Information Technology devices. The value for efficiency in this case falls between zero and 1, and may be expressed by the following equation:

$$DCiE = \frac{IT\ Load\ Power}{Total\ Data\ Center\ Input\ Power} \tag{1}$$

The overall electrical consumption may be controlled by the electrical efficiency of the data center and the size of the IT Load according to:

$$Power\ Consumption = \frac{IT\ Load\ Power}{DCiE} \tag{2}$$

Given an IT load, to achieve the objective of minimizing power consumption Data Center Infrastructure Efficiency must be maximized.

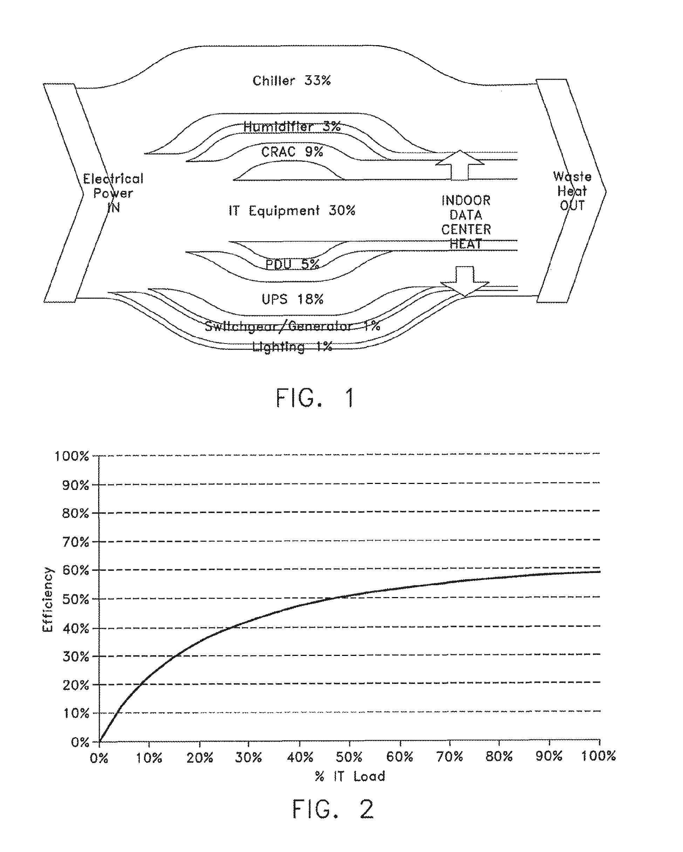

If the data center were 100% efficient, then all of the power supplied to the data center would reach the IT loads. This is an ideal case. In an actual data center, there may be a number of ways that electrical energy is consumed by devices other than the IT loads, including but not limited to: transformers, UPS, power wiring, fans, air conditioners, pumps, humidifiers, and lighting. Some of these devices, like UPS and transformers, are in series with the IT loads while others, like lighting and fans, are in parallel with the IT loads. In any case, virtually all of the electrical power feeding the data center ultimately ends up as waste heat. A diagram showing where electrical and heat power flows in an exemplary data center is shown in FIG. 1.

The data center modeled in FIG. 1 is a typical high availability dual power path data center with N+1 CRAC units, operating at a typical value of 30% of design capacity. Note that in this example much less than one-half of the electrical power feeding a data center actually is delivered to the IT loads. The data center in this example may be considered to be 30% efficient.

Power and cooling equipment in the data center are characterized for their losses by the manufacturers, who provide data regarding electrical efficiency for each device. In the case of power equipment, efficiency is typically expressed in percent. In the case of cooling equipment, efficiency may be expressed as a coefficient of performance, which is the ratio of the heat power removed by the air conditioner to the electrical input power. Lighting power may be expressed as a simple constant loss. For example, a 60 Watt light bulb is 0% efficient in the data center since it generates 60 Watts of heat and provides no power to the IT load.

Data center efficiency performance typically can not be described by a single number. At any given instant in time, a data center has a single number for its current efficiency measurement. This number is the result of the inherent power consumption characteristics of the power, cooling and lighting systems, and the value of the IT load at that point in time. However, in a data center, the efficiency will vary over time because the IT load varies over time, the outdoor conditions vary over time, and the cooling mode of the data center can change over time. All of these factors affect the data center efficiency and the result is that data center efficiency is constantly changing. Any particular one-time measurement of data center efficiency is just a "snapshot" and cannot be used to predict future performance. Single measurements of data center efficiency are inherently inaccurate and are difficult or impossible to use as a basis for benchmarking or efficiency management.

The variation of data center efficiency may be better understood and described by graphs of efficiency as a function of IT load, outdoor conditions, and cooling operating mode. FIG. 2 shows how the efficiency of a typical data center varies with the IT load. A fixed installation of power and cooling equipment in a data center has an efficiency curve of the form shown in FIG. 2, with efficiency that declines at lighter load, and is zero when the IT load is zero. This curve identified in FIG. 2 illustrates a fundamental principle to understanding the improvement of data center efficiency: Specifically, as shown, there are two fundamental ways to improve data center efficiency. One way is to raise the data center efficiency curve. Another way is to move the operating point to a more efficient part of the efficiency curve.

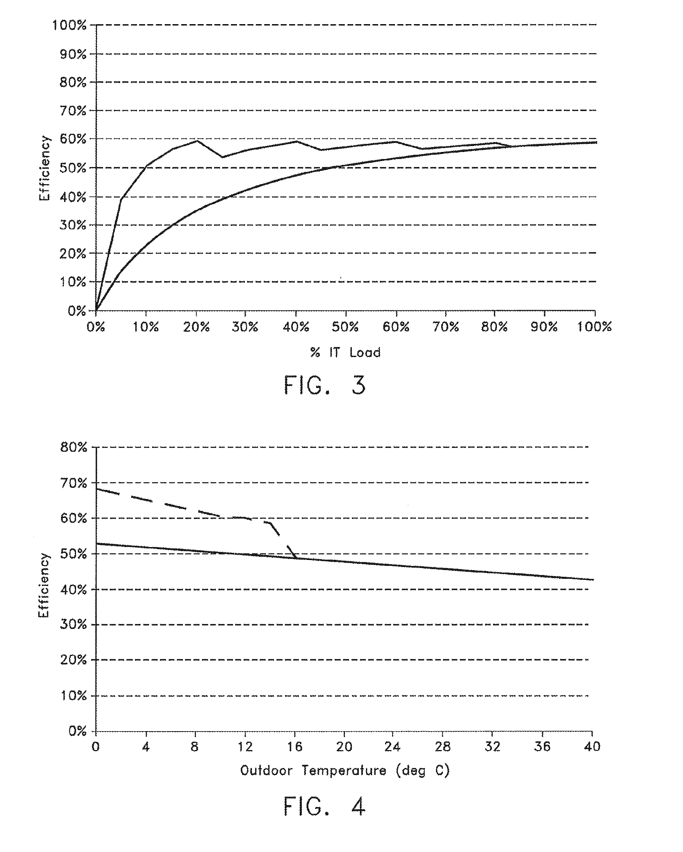

Raising the IT load in FIG. 2 moves the operating point in a favorable direction. Also, reducing the power and cooling capacity (through rightsizing or scalable architecture) has the same effect. The benefit of rightsizing the facility is shown in FIG. 3, which is the efficiency curve for a data center where power and cooling capacity is added in increments as the load increases. In both cases the efficiencies of the power and cooling equipment is identical. In FIG. 3, the typical data center efficiency curve is compared to the efficiency curve of a data center made up of five identical modules, where the modules are added and turned on only when their capacity is needed.

At full load, FIG. 3 shows that a modular system has no efficiency advantage. However, at lighter loads, the installed modules operate at a higher fraction of their rated load, with a significant gain in efficiency. From this curve we can understand why modular, scalable power and cooling infrastructure is one of the most effective ways to improve the efficiency of data centers that spend a significant fraction of their operating lives at loads below (and sometimes well below) their ultimate design value.

Outdoor conditions of a data center are further factors that vary with time and affect data center efficiency. FIG. 4 shows how the efficiency of a typical data center varies with outdoor air temperature. (Note that an appropriate choice of the x-axis may be the so-called "wet-bulb" temperature or "dew point temperature", instead of the ambient temperature, depending on the type of heat rejection system used.) The efficiency of a typical data center declines as temperature increases because the heat rejection systems consume more power when processing the data center heat. In addition, the efficiency declines as a result of outdoor heat infiltration into the data center, which becomes an additional heat load that must be processed. The dotted curve of FIG. 4 represents how the efficiency might improve at lower temperatures if the cooling system has an "economizer" operating mode. Clearly the efficiency varies with outdoor temperature, especially if the data center is equipped with economizer cooling modes.

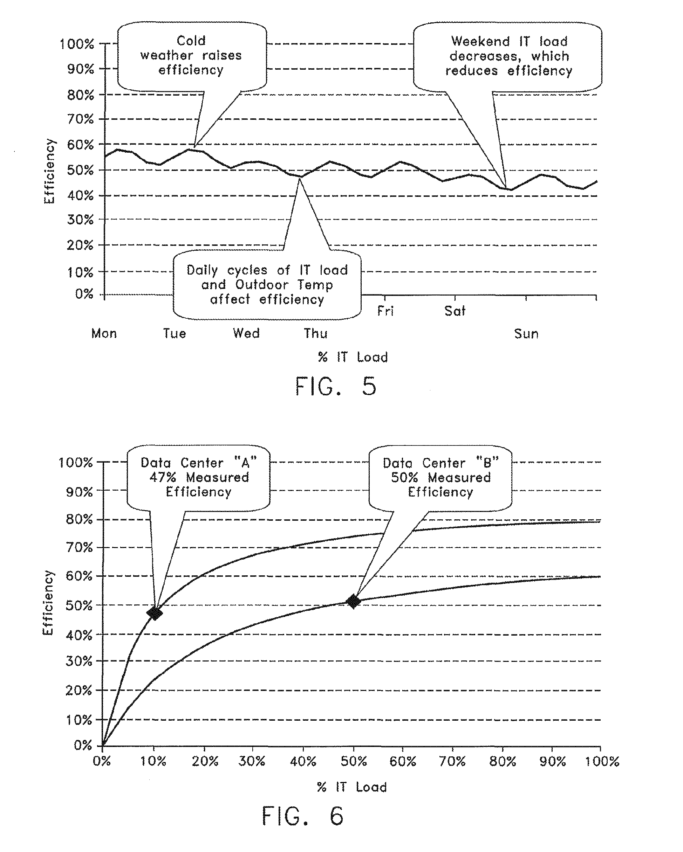

In an actual data center, the efficiency changes as IT load and temperature change. FIG. 5 shows how the efficiency of a data center might vary during the course of a week as a result of three different effects: daily variation caused by daily swings in the IT load and outdoor temperature; day-to-day variation caused by the weather; and IT load reduction on week-ends.

While the day-to-day variation is not dramatic, such a variation may seriously degrade the usefulness of a specific, one-time measurement. Even if a specific efficiency measurement is made with extreme precision, its accuracy in predicting electrical consumption, measuring the effect of efficiency improvement activities, and performing trending analysis may be poor, because of the expected day-to-day variation in efficiency.

The variation of data center efficiency with load has another important effect on how efficiency data is to be interpreted. Consider an example of two data centers which are to be compared in FIG. 6. With the first data center, an efficiency measurement of 47% is obtained. With the second data center, an efficiency measurement of 50% is obtained. The second data center has a better efficiency measurement, so it seems reasonable to assume that it is a "greener" data center of fundamentally superior design. However, consider a more detailed view of these two data centers. Specifically, FIG. 6 shows that the first data center, even though it has a lower measured efficiency, has a much higher efficiency curve. From a specification standpoint, the first data center probably uses much higher efficiency power and cooling equipment and an optimized airflow design. Nevertheless, because the percentage of IT load in the first data center is lower than the second, the first data center operates on an inefficient part of the efficiency curve.

Thus, at first blush, it is difficult to determine which design is better in FIG. 6. An engineer may determine that the inherent design efficiency of the first data center is superior. However, a business person may determine that the sizing of the data center was poorly planned which eliminated all the technical efficiency gains. The decision as to which "design" is better depends on whether appropriate sizing is considered to be part of the design. (Note that the superior technical performance of the first data center could have been realized in this case if a modular scalable implementation had been used, as previously described in FIG. 3.)

In certain embodiments, the concept of using a single number to represent data center efficiency, such as an efficiency rating obtained by a single measurement of the data center, may be fundamentally ineffective because it does not achieve the objectives outlined above. Such a representation may not be effective for benchmarking, nor may it be effective for trending and for providing actionable insights into the opportunities for efficiency improvement.

At least one embodiment uses measurements to achieve at least some of the objectives. As will be described in greater detail below, a model that accurately represents the workings of a specific data center, and accepts as inputs the IT load, outdoor weather statistics, time-of-day electric rates, etc., maybe used effectively in a data center energy management program. Unlike the measurement of an actual operating data center, which provides only data for the conditions at the time of measurement, a model can provide data for any input conditions fed to it. For example, a model could provide the expected value of the efficiency of a data center at full load, even when the IT load is a small fraction of the rated load. Models of two different data centers can be fed the same input conditions, which allow a meaningful comparison. Furthermore, a model can even be created before a data center is even built, allowing the prediction of performance in advance.

The following are some of the benefits that a model provides that cannot be obtained by measuring and recording data center efficiencies: the ability to accurately predict the efficiency performance of a proposed data center design in advance; the ability to estimate with high accuracy the efficiency performance of an operating data center for conditions that are impractical to measure, such as for different IT loads; the ability to estimate with high accuracy the efficiency performance of a data center for situations with only partial information, where it is not practical to measure power consumption of all of the circuits; the ability to estimate with high accuracy the efficiency of the data center for various outdoor conditions, and allow estimation of efficiency averages over times the ability to identify and quantify the contributions specific devices in the data center power, cooling, and lighting systems are making to the inefficiency of the data center; the ability to identify data center subsystems that are operating outside of their expected efficiency parameters; and the ability to benchmark and compare the models of different data centers.

While a single measurement of data center efficiency at an operating point is informative, it may not be actionable without the capabilities listed above. For this reason, the model may be employed to create a process and system for efficiency management. It is the model which allows understanding of the causes of inefficiency; therefore, the purpose of data center efficiency measurement is to establish the parameters of the model.

Thus, a purpose of measurement of data center efficiency may be to obtain information that contributes to the creation of an accurate model for that data center. It is the model which provides actionable information about data center efficiency, not the measurement.

Although the benefits of data center efficiency modeling are valuable, there remains a question of whether developing and operating a data center efficiency model for specific data center is feasible and practical. The answer to this question depends on the degree of precision required from the model. Embodiments of the disclosure may be used to create and operate models of sufficient accuracy to obtain the objectives of efficiency management outlined above and such models may be built into the standard software tools used to manage data centers.

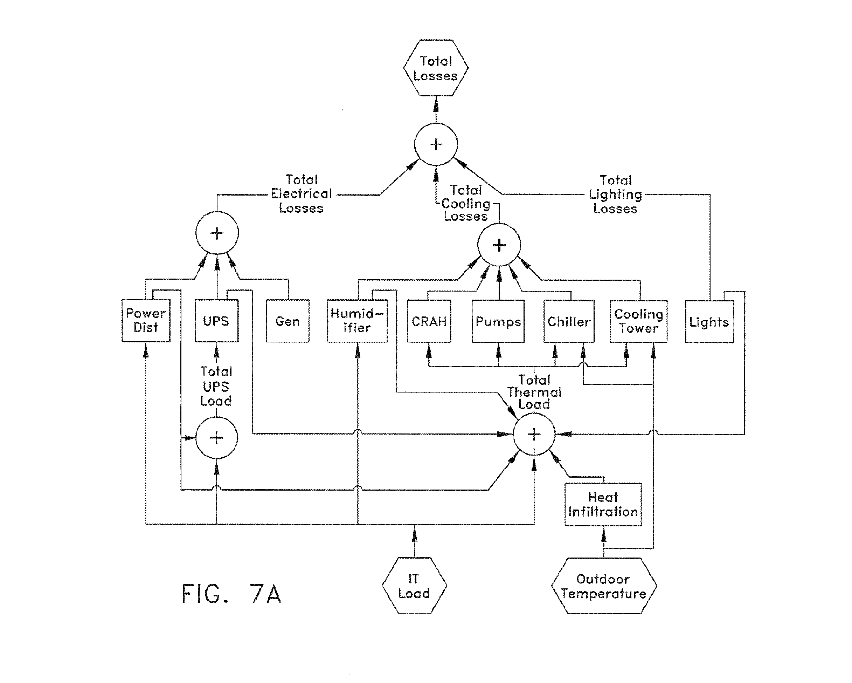

An energy flow diagram for a practical data center efficiency model is shown in FIG. 7A, which depicts how the data center infrastructure power consumption (losses) are determined by the IT load and outdoor conditions, giving rise to energy flows within the power, cooling, and lighting systems. Each device class in the data center (UPS, CRAH, etc.) accepts a load as an input and generates power consumption (loss) according to the device configuration and inherent efficiency characteristics.

An efficiency model for a data center can be created for an existing data center, or it can be created before a data center is even constructed, if the design and the characteristics of the power, cooling, and lighting devices are known. If the model accurately represents the design, the data it provides will be similarly accurate. While the electrical performance of some types of devices, such as lighting, UPS, and a transformer is very consistent and predictable, there are many uncertainties regarding the as-built performance of devices, such as pumps and air conditioners that cause the model to lose accuracy. This is where measurement can help.

The preceding discussions explain the limited usefulness of taking periodic measurements of data center efficiency, due to poor repeatability and lack of guidance provided. Instead, managing efficiency may be done in embodiments using two types of measurements with two different objectives:

**Initial Measurements,** to calibrate the data center efficiency model, establish as-is and should-be performance, and identify potential efficiency improvement opportunities. Initial measurements typically require measurements on individual power and cooling subsystems, in addition to an overall efficiency measurement.

**Ongoing measurements**, to compare against the model to provide alerts of unexpected inefficiencies and to quantify improvements. Ongoing measurements may be made by periodic sampling or by continuous instrumentation.

Recommendations for initial and ongoing measurements are described below.

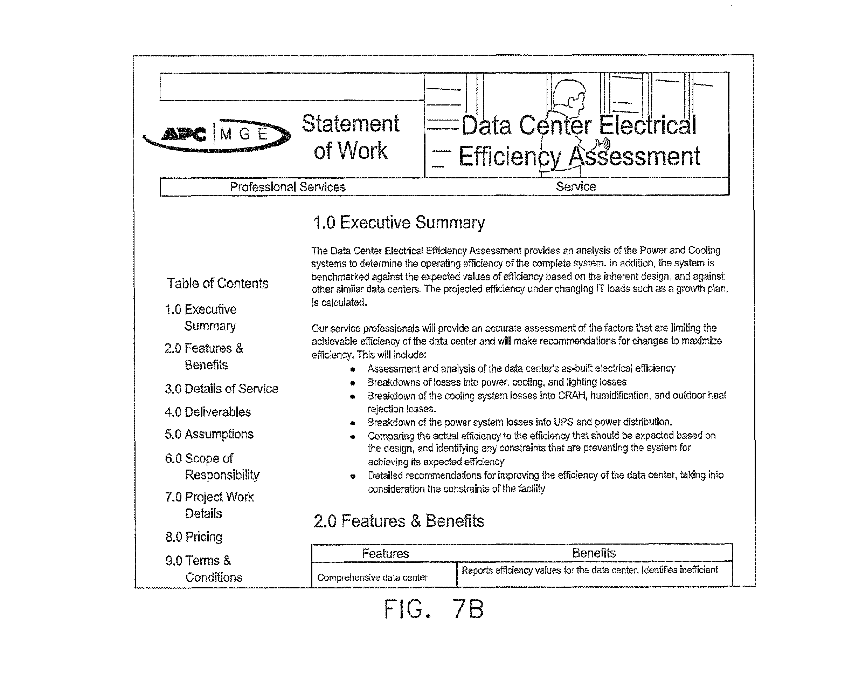

The first time the efficiency of a data center is measured, it should be part of an overall efficiency assessment by experts. In addition to making an efficiency measurement, a data center efficiency assessment typically provides an analysis of the as-built configuration and recommendations regarding efficiency improvement. Ideally, an assessment should provide a model of the data center as one of its deliverables. FIG. 7B illustrates an example of a statement of work for a data center efficiency assessment. The data collected during an efficiency assessment should include measurements of enough subsystems to allow a mathematical efficiency model to be calibrated.

Once a data center model is calibrated using initial efficiency measurements, the model may be immediately used to establish benchmark performance, such as expected average efficiency over a year, or to establish the efficiency at other reference IT loads and outdoor conditions, such as those established for industry comparative benchmarking.

After data center efficiency has been measured and the efficiency model has been calibrated, ongoing measurements should be made to quantify any efficiency improvements and to provide notice of any undesirable loss of efficiency. When the measured value of efficiency is found to change from the original measured value, we have already shown that this can be due to variations in the IT load or in the weather. The model can correct for the effects of IT load and weather and reveal whether any efficiency variations found are due to these effects or are caused by actual changes in the underlying data center infrastructure.

Ongoing measurements of efficiency can be performed periodically, such as twice per year (spaced six-months apart, e.g., once in the summer and once in the winter), or a continuous real time measurement system can be installed.

To measure the data center efficiency at a particular operating point, the total input power to the data center and the total IT load is measured. If the facility is a dedicated data center, then the input power can be measured at the utility mains connection to the building. If the load were a single giant IT load device, then the IT load power is a single measurement of the power at the device electrical connection. Only two measurements are needed in this case. Unfortunately, this ideal situation is never achieved. Most data centers are part of multi-purpose buildings with other loads besides the data center. Typical data centers are made up of collections of IT devices, possibly thousands, many with separate electrical circuits.

To ensure an exact or near exact measurement, all devices that draw power from the mains to make up the total data center load are separately instrumented from other non-data center loads and their input power summed. Furthermore, to obtain the total IT load, all IT devices are separately instrumented and their input power summed. In a 1MW data center, for example, this could require thousands of simultaneous power measurements, which may be a technical and practical challenge. For this reason, some data center operators have concluded that efficiency measurement is impractical. Fortunately, complicated instrumentation and time consuming measurement are not necessary because a combination of using a small number of consolidated measurement points along with models of the system can be demonstrated to provide efficiency measurements of sufficient accuracy.

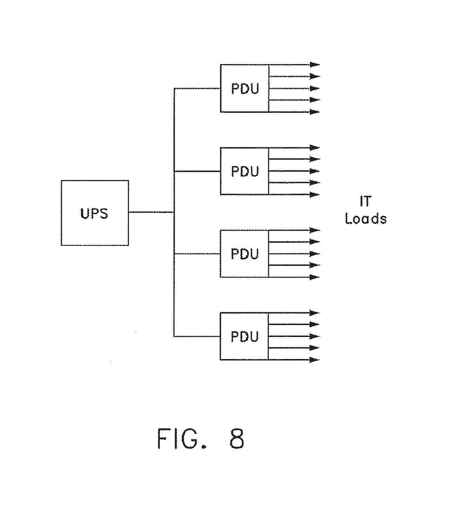

As an example of how actual measurement can be dramatically simplified using the model, consider the case of measurement of the IT load. FIG. 8 shows the typical situation of a large number of IT loads being provided power from power distribution units (PDUs) supplied from a UPS.

To obtain the actual IT load, all of the branch circuits supplying every IT load, which could be thousands of measurements, should be measured and summed. If instead, the power at the output of the UPS is measured, the problem is dramatically simplified to a single measurement. However, an error is introduced due to measuring the sum of the IT loads plus the power consumed by the PDUs (the PDU losses). This error could be in the range of 2% to 20% depending on the data center, which is quite significant. However, PDUs can be very accurately characterized in the model, and the model can compute the PDU losses to a high degree of accuracy given the UPS output power. The model can subtract the PDU losses from the UPS output power to obtain the IT Load with no significant error. In this way, the model allows us to cut potentially thousands of measurements down to a single measurement.

The technique of using the model to gain a large amount of information from a small number of measurements can be used for one-time measurements, and it also can be used as part of a continuous, permanent efficiency monitoring system, thereby dramatically reducing the cost of continuous efficiency monitoring.

The number of power measurement points for ongoing efficiency measurements is typically less than the points that are used for initial measurements. Ongoing measurements need to focus on circuits that are most likely to change over time and are the largest contributors to power consumption. For example, there are some devices, such as transformers, where it would be valuable to measure each transformer initially, but whose ongoing power contribution can be computed with high accuracy by the model. In general, ongoing measurements require half the initial measurement points. This suggests an instrumentation strategy where the ongoing measurement points are monitored by permanently installed power metering, while the additional points needed for initial measurement are measured using portable instrumentation.

The determination of which circuits should be measured initially and on an ongoing basis may be an important component of a professional data center efficiency assessment.

Data center efficiency may be a calculated number based on power measurements. Power measurements may be obtained from the following types of equipment: (1) Portable power measurement equipment (e.g., a Fluke 435 three phase power quality analyzer kit from Fluke Corporation of Everett, Washington); (2) Permanently installed power measurement equipment (e.g., a Power Logic PM700 power meter from Schneider Electric - Power Management Operation of LaVergne, Tennessee); and (3) Permanently installed built-in power measurement functions in cooling and power equipment (e.g., an APC Symmetra UPS from American Power Conversion Corporation of West Kingston, Rhode Island).

Data centers may be permanently instrumented for efficiency, or efficiency may be audited periodically using portable instrumentation. In either case, the power circuits to be measured are first identified as described in the previous section. It is not necessary to measure the power flows in all of the thousands of circuits in a data center. Very accurate computations of efficiency can be made by measuring the power flow in a small subset of the power circuits. The efficiency measurement strategy consists of the following elements: deciding on permanent versus periodic/portable measurements; identifying the appropriate measurement points; and establishing a system for reporting efficiency data.

Efficiency measurement instrumentation may be permanently installed or measurements may periodically be made by qualified service personnel with portable instruments. The preferred solution depends on a number of factors, and there are a number of benefits of each approach. An example of the comparison of the different approaches is summarized in Table 1:

*Table 1 - Comparison of features and benefits of permanent vs portable instrumentation for data center efficiency*

| | Permanent Instruments | Portable Instruments | Comment |
|---|---|---|---|
| **Frequency of measurement** | Continuous | 2X Per year | To capture efficiency data requires measurements in both the summer and winter |
| **Instrumentation first cost-existing data center** | ~$0.03/Watt | $0 | Assuming some instrumentation already provided standard as part of the power and cooling equipment. This is the cost of implementing chillers, pumps, and other equipment outside the IT space |
| **Instrumentation first cost-existing data center** | ~$0.10/Watt | $0 | Retrofitting instrumentation adds cost when compared with a new installation. |
| **Annual operating cost** | $0 | ~$0.06/Watt | includes two audits per year required to capture summer and winter performance |
| **Risk of downtime due to human error** | Small | Significant | Audits using portable equipment usually must be performed on live circuits |
| **Proactive warnings of low efficiency** | Yes | No | Continuous measurement can instantaneously be compared to expected value to provide alerts |
| **Recommended for:** | New installations, or existing installations where the risk of making periodic measurements of live circuits is not acceptable | Existing installations, especially those near end of life | |
| $/Watt costs in the table are the approximate costs for a 1 MW data center. Costs generally vary with the size of the data center, | | | |

Permanent instrumentation provides continuous real time efficiency data that provides significant advantages. One advantage of permanent instrumentation when compared to periodic audits is that there are no people attempting to make measurements on live power circuits with portable instruments; any time people are attempting to make measurements on live circuits there is a risk of error and downtime. The disadvantage of permanent instrumentation is the greater first cost, especially for retrofit installations. Therefore, periodic audits using portable instrumentation have a lower cost, particularly for existing data centers near end-of-life.

Some power and cooling devices, such as UPSs, may already have built-in power measurement capability. If the accuracy of this built-in capability is sufficient, then this saves the need to use any additional measurement instrumentation on the affected circuit.

Whether the instrumentation is permanent or portable, the appropriate power measurement points must be selected. It is not necessary to measure all of the thousands of circuits in the data center. The objective is to measure the fewest circuits that will provide the data necessary to construct a model with requisite accuracy. For an existing data center, this problem may be compounded by practical matters related to how the building was wired. Furthermore, some circuits or devices, such as cooling towers, may be intentionally shared with loads outside of the data center to be measured, making it impossible to directly measure the consumption related to the data center. Therefore the instrumentation measurement point selection may need to be customized for a specific installation.

As discussed, the electrical efficiency is not directly measured by the instrumentation, and that additional calculations may be required. Furthermore, to provide the efficiency curve for the data center requires that the measurements be used in conjunction with the efficiency model for the data center.

For periodic audits, the efficiency curve for the data center may be calculated using the principles described herein. For permanent instrumentation, a real time calculation of efficiency may be possible and preferred. This function should be provided by the power and cooling capacity management system, which already contains the model for the data center. When properly implemented, electrical efficiency trends can be reported, and alerts generated based on out-of-bounds conditions. Furthermore, an effective system would provide the ability to diagnose the sources of inefficiency and suggest corrective action.

As shown, measurements are most useful when used in conjunction with models. For this reason, modeling is a critical aspect of efficiency management and the data needs of the model establish the requirements for the measurement of power flows within a data center.

To manage data center efficiency initial power measurements are made to establish the model and baseline conditions, and power flow is monitored either periodically or continuously on an ongoing basis to provide information about efficiency trending, inefficient conditions, and opportunities for improvement.

There are thousands of power flows within a typical data center. Analysis shows that it is not necessary to measure all of these flows in order to measure and manage efficiency. When combined with appropriate modeling and information about the power and cooling devices, it is possible to create an efficiency management system of high accuracy with only a small number of measurements.

To manage efficiency, users have an option of permanently instrumenting the appropriate power flows within a data center for real time efficiency metering, or they can perform periodic audits of power flows using portable instruments. For new data centers, permanent instrumentation is appropriate. For existing data centers, a mix of limited permanent instrumentation and periodic audits is recommended.

In a certain embodiment, a model of an energy management system for data centers is described. The simplest concepts of energy management are based on energy measurement and data analysis, such as trending. While measurement is certainly an important element of energy management, most of the useful benefits of an energy management system must be provided by a model. Measurement cannot be used to project performance under future conditions, and it cannot provide guidance regarding improvement opportunities.

While it may be possible to measure the Data Center Infrastructure Efficiency (DCiE) by direct measurement without using a model, it is not possible to determine the DCiE at any condition other than the condition of the data center at the time of the measurement. A model may provide context and meaning to the measurements, and may allow performance of the data center and its subsystems to be compared to other data centers. The model may be used to project the Annual DCiE with high accuracy in a few seconds, a task that normally would take a year of data collection. For example, the change for the next year's DCiE resulting from an actual change or a hypothetical change can be accurately projected. This would be impossible without the model. The model may even estimate with high accuracy the power flows at points within the data center that cannot be actually measured due to practical constraints. In general, most of the functionality and value of the system is due to the model.

In one embodiment, the model is a computer simulation of the energy consumption of the data center. The model includes all of the energy flow dependencies and interconnections, as well as models for the various power and cooling devices. A simulation using the model takes inputs, such as outdoor temperature, IT load, and operator settings, and can determine all of the energy flows in all of the circuits in the data center.

The model is configured to address energy flows, which may be in the form of electrical power flow through wires, or may be heat flows through water pipes or through air. All of these are energy flows may be accounted for in the model. Energy may be conserved in all processes in the data center. Some devices, like IT loads, consume electrical energy and make heat. Some devices, like transformers and UPS, transform electrical energy with some heat generation (loss) as an undesirable by-product. Some devices, like air conditioners, consume electrical energy and pump heat. The data center as a complete system (including the IT load) consumes electrical energy and makes heat that is exhausted to the outdoors.

Almost every data center is different, using different numbers of different devices in different configurations. The devices themselves typically have inconsistent and incomplete performance specifications. Therefore it appears that every data center has a different model. The creation of a model for a specific data center would consequently appear to be a very complex challenge involving considerable research and custom programming. However, using a systematic approach, a simple framework for easily creating a model for any data center may be developed.

In one embodiment, the model may be a hierarchy including the following three model levels: (1) the data center level; (2) the subsystem level; and (3) the device level. With the data center level, the complete data center as a single entity may be created. An IT load capacity and loss as a function of IT load may be exhibited. Also, the DCiE as a function of load may be represented. With the subsystem level, a number of subsystems comprising the complete data center system, such as UPS, air handlers, lighting, chillers, etc, with each subsystem exhibiting a characteristic capacity and characteristic loss parameters, may be represented. With the device level, one or more devices of the type comprising each subsystem, such as a group of separate air handler devices comprising the air handler subsystem, may be represented.

Since the model is a hierarchy, one aspect of the modeling method is how the devices are aggregated into subsystems, and how the subsystems are aggregated into the final data center model. This aggregation will be described in greater detail below.

To describe the model, its methods, and its rules, the model may be broken down into the following elements: models of device characteristics; methods for aggregation of devices into standardized subsystems; and methods for aggregation of subsystems into a complete data center. Each of these elements will be considered in turn, and then the integrated model will be described.

Every device in a data center that processes energy may be represented in the model. For an embodiment of the model described herein, each device may be represented by a model, which simplifies the computations required in a complete simulation, and can avoid or dramatically simplify the calculations for circular dependencies in the model. The base device model may include models for the energy use of the energy-using components, such as UPS, PDU, air conditioning, etc, within the data center. Each device may be considered to have a primary input called the "load" expressed in Watts, and may have five model parameters: Component capacity may be modeled using two parameters: a nameplate load capacity rating; and a usable capacity rating based on design constraints of the system. Component electrical consumption may be modeled using three loss parameters: a fixed loss; a loss proportional to the load; and a loss proportional to the square of the load. These parameters may be expressed in percent of the nameplate capacity rating. The device model is provided a load in Watts as an input and generates an energy consumption rate as an output.

For many devices, the usable capacity will not be equal to the nameplate capacity. This may be due to the operating conditions of the device, engineering practice, or user policy. For example, the usable capacity may be less than the nameplate capacity because the device is operated at a high altitude, or a high outdoor temperature. In most cases, the usable capacity will be less than the nameplate capacity. Furthermore, the usable capacity of a device is affected by the design and policies of a specific data center, whereas the nameplate capacity of a device is fixed and independent of the installation. Therefore, the usable capacity of a device must be calculated for a specific data center, while the other four device model parameters can be provided by the device manufacturer. A summary of factors that may affect usable capacity are provided in Table 2.

| Category | Condition | Effect |
|---|---|---|
| Operating Environment | The nameplate capacity of the device is based on specific operating conditions such as outdoor temperature, altitude, return air temperature, etc. | The actual worst-case environmental operating conditions are not the conditions at which the device was rated. The usable capacity is less than the nameplate capacity. |
| Engineering Practice | The nameplate capacity of the device is based on specific installation conditions such as pipe lengths, pump types, water temperature, orientation, clearances, etc. | The design of the system is engineered differently than the conditions at which the manufacturer rated the equipment. The usable capacity is less than the nameplate capacity. |

*Table 2 - Reasons for difference between device nameplate capacity and the device usable capacity*

| Category | Condition | Effect |
|---|---|---|
| **Policy** | A policy is established that requires no device be utilized at more than X percent of its usable capacity. Typically the value is between 75% and 90%. | The usable capacity according to the policy would be X percent of the usable capacity determined based on the environmental and engineering factors above. |

As discussed, there can be a considerable difference between the nameplate capacity and the usable capacity of a device. For example, a cooling tower might have a nameplate rating of 1MW under specific outdoor and flow conditions, but might need to be de-rated to only 600KW because of expected worst case high temperature conditions, with a further derating to 500KW due to limitations of the specific engineering design of the pumps and pipes of the data center. The rating may further be subject to an 80% load rating policy, such that the ultimate usable load rating of this 1MW cooling tower is only 400KW.

Some devices may be configured in redundant arrangements in a data center. This configuration may limit usable data center capacity but is a characteristic of the system design and not a characteristic of the device. In this model, the effect of redundancy on data center capacity may be captured at the subsystem level and not at the device level of the model hierarchy. Therefore the loss of capacity due to redundant configuration of devices may not be considered in the calculation of the usable capacity of devices. The effect of redundancy on usable capacity will be discussed below during the discussion of the aggregation of devices.

In one embodiment of the model, the power consumption of a device may be based on its load relative to the nameplate capacity, and for a given Watt load the loss may not be affected by the usable capacity. Therefore, to determine the efficiency of a device, subsystem, or even a data center for a given load, the nameplate capacity rating is required without having to require the usable capacity parameter. However, the usable capacity of a device does directly determine the usable capacity of the subsystem and consequently it affects the usable capacity of the data center. Usable capacity data becomes necessary when capacity analysis is performed, or when efficiency is reported as a function of data center capacity.

Some devices may have loss factors that vary with operator settings, automatic mode changes, or outdoor conditions. In these cases, the loss coefficients may be expressed as formulas depending on these conditions. For example, a chiller proportional loss factor may vary in relation to outdoor temperature, or a fixed loss of a cooling tower fan may have a step increase based on an automated stage controller. These exceptional cases affect only a small number of the parameters of the model. Nevertheless, a complete model should incorporate these cases, and the following explains the method for handling these cases with the proposed model.

Some devices, e.g., air conditioners, may have multiple operating modes with different efficiencies associated with each one. For example, some air conditioning systems have an "economize" mode for periods of low outdoor temperature, where the system efficiency is significantly increased. Such devices cannot be modeled using a single efficiency curve based on the simple three-parameter loss model (fixed loss, proportional loss, and square-law loss) described herein. To establish an efficiency model for a multi-mode device, a different technique may be used.

The performance of devices that switch between different operating modes can be projected over an extended period using a technique called "state-space averaging." This technique may be achieved by projecting the relative amounts of time spent in the various modes, then generating a weighted average of the system's output. This technique is readily applied to efficiency and loss calculations.

To use the efficiency model described herein with devices having multiple operating modes, the fixed, proportional, and square-law losses first must be determined for each operating mode. Then, the overall loss contribution over an extended period is computed by multiplying the loss in each mode by the expected fraction of the time spent in that mode. For example, a complete description of a system with two modes would require three efficiency curves: efficiency curve in mode 1; efficiency curve in mode 2; and expected overall efficiency curve, given a stated assumption of the amount of time spent in each mode.

Devices whose loss characteristics depend on other variables may be further predicted. The loss model as a function of load assumes that the load and the system design are the only inputs that affect the device power consumption. The system design can influence the loss coefficients and the installed device capacity, and the load is related to the loss by the three loss parameters (fixed, proportional, and square-law parameters). This loss load calculation is a realistic assumption for some device types, such as a UPS. However, for other devices such as a chiller, the electrical consumption may be affected by other operating conditions, such as the outdoor temperature.

For data centers, the following key inputs, other than load, which can affect the electrical power consumption of a device, may be identified: outdoor temperature; outdoor humidity; operator settings (such as chilled water set points, valve settings, etc.); and degraded conditions (such as blocked filters). These factors may be incorporated into the model by allowing them to affect the device loss parameters. For example, the proportional loss of a chiller might vary with outdoor temperature, or the fixed loss of a pump might vary with water filter blockage. In each case, a loss coefficient may be represented as a formula including one or more variables from the above list.

This approach also allows parametric modeling of the data center using statistical inputs. For example, the outdoor temperature may be provided for a given site in a statistical form, such as bins of degree-days. This statistical data can be applied to the model to predict long term performance at a site in advance. As an example of the capability of the model, consider the case where an improvement is proposed to a chiller at an existing data center. By providing the parametric data of the proposed chiller, the model can be used to project the annual savings in the upcoming year, taking into account the effects of seasonal weather changes. In fact, the annual efficiency of a data center, including the effect of weather at a site, can be predicted with high accuracy even before the data center is built.

For devices that are affected by these other variables, the five-parameter model described herein may be extended by adding additional parameters. Note that only some devices have additional parameters that have a significant impact on the model. The following table is a list of known extra parameters:

*Table 3 - Known additional parameters required for specific device types*

| Device | Effect to be modeled | Parameter |
|---|---|---|
| **Cooling tower** | Tower fan speed affected by outdoor fan speed outdoor temperature | Fixed loss outdoor temperature coefficient |
| **Chiller** | Chiller work is affected by dew point | Proportional loss wet bulb outdoor temperature coefficient |
| **CRAH** | Cooling work is affected by chilled water temperature | Proportional loss water temperature coefficient |
| **CRAC/CRAH** | Cooling work is affected by return air temp | Proportional loss air temp coefficient |
| **Infiltration** | Thermal infiltration is affected by outdoor temperature | Fixed loss outdoor temperature coefficient |

In addition to the parameters that establish the models of the devices, devices may have other attributes that are important to the model. Attributes differ from parameters and are used to classify and organize devices in a complete data center model. The following are the attributes that devices have in addition to their mathematical parameters:

**Device Type**. Every device may be identified as being of a standard type from a pre-defined type list. For example, the device type may be identified as a humidifier, pump, UPS, breaker panel, wire, etc. This identification may be used to facilitate the development of standard models, and to allow different data centers to be compared down to the device level.

**Device Subsystem Membership**. Every device may be assigned to a subsystem from a pz-e-defined list. This is to facilitate a standard hierarchical model and subsystem benchmarking.

**Device load assignment**. The power consumption of every device may be assigned to one of three classes - IT load power, infrastructure power, or not-included. These classifications should be based on predefined rules and are used when computing data center efficiency.

The calculations of data center efficiency may be sensitive to device load assignments, and many publicly reported data center efficiency numbers may not be based on consistent device load assignments. For example, for purposes of efficiency calculations, the power consumption of a network operations center is sometimes classified as IT load, sometimes classified as infrastructure, and sometimes it is not included in the calculation. These assignments will create a substantial variation in the computed efficiency result. Therefore device load assignments should be uniform to permit industry benchmarking.

For some types of devices, all of the parameters are not meaningful but the standard five-parameter device model can still be applied. For example, in the case of lighting, there is no clear relation between lighting and the IT load. This device type can still be accommodated by treating it like any other power or cooling device by setting the proportional and square law losses to zero, by setting the capacities to infinity, and by computing a fixed loss parameter that is equal to the lighting load divided by the total system IT rated load.

In certain embodiments, the data center may be comprised of subsystems, and these subsystems may be comprised of devices. The characteristics of the complete data center arise from the characteristics of the devices included within the data center. Therefore, to model the entire data center, the characteristics of the devices that comprise the data center must be aggregated. As discussed, the model for the subsystems and for the complete data center system can be created by a mathematical consolidation of the models of the individual components according to the following principles. Specifically, devices may be aggregated into subsystems, and subsystems may be aggregated to the complete data center. The loss of the total data center is the sum of the losses of the subsystems, which in turn is the sum of the loss of the devices comprising each subsystem. The losses of devices and their associated subsystems may be computed by first identifying the actual load of each device as a fraction of its rated load. Next, the fixed, proportional, and square-law losses resulting from each load is calculated and then added together. Fixed losses do not vary with load, proportional losses vary with the load, and the square-law losses vary with the square of the load.

When two identical devices, such as UPSs, are consolidated into a subsystem in which the load is shared equally across the devices, the subsystem loss parameters (fixed, proportional, and square-law) of the consolidated subsystem are the same as the original device. When two identical devices, such as UPSs, are consolidated into a subsystem in which the load is not shared equally between the devices, two of the subsystem loss parameters, the fixed and the proportional loss parameter of the consolidated subsystem, are still the same as the original device. The third loss parameter of the consolidated subsystem, i.e., the square-law loss parameter, will be different from the original device parameter by an amount related to the variation of the load among the devices. However, it can be shown that the original device square-law loss parameter may be used in almost all practical cases with a very small error. This property allows the model to be consolidated without detailed information about the balance of loads among multiple devices such as UPS or air handlers.

The load on a particular subsystem may be determined by the energy flow model of the data center. Oftentimes, it is not the same as the IT load. For example, the air handler load will typically consist of the IT load plus other heat generating load such as the UPS, humidifiers, and lighting.

The energy flow model that determines the loading on different subsystems may vary between different data center designs. For example, in some data centers, the UPS may provide power to air handlers in addition to the IT load, while in other data centers, the UPS may only power the IT load. In another example, in one data center, the switchgear may be indoors where its heat creates an air conditioner load, while in another data center, the switchgear may be outdoors.

As discussed, data centers are constituted with devices, and the introduction of the intermediate concept of subsystems into the hierarchy may not be necessary. However, the provision of accounting for subsystems may be very useful and may be included in the proposed model. In particular, the inclusion of subsystems may provide two benefits: First, accounting for subsystems organizes devices into standardized groups, which permits benchmarking across data centers for different data center subsystems. Second, it is a convenient point to consolidate data from devices that are of a related type. This may be particularly useful in large data centers where there might be hundreds of power and cooling devices.

The concept of subsystems may be most useful if the names and definitions of the subsystems are standardized across all data centers. While some subsystem types are generally recognized across the industry, the boundaries are vague and not well defined by any standard. To achieve a common definition or language, subsystem definitions may be established; understanding that the definitions may need to be re-mapped in the future if industry standards emerge. Exemplary definitions are shown in Table 4:

*Table 4- The various data center subsystems*

| Subsystem | Definition |
|---|---|
| **Switchgear** | Power equipment and wiring between the utility mains supply and the UPS. includes transfer switches for standby generator, if present. Includes indoor and outdoor equipment and switchgear heaters, if present. Includes breaker panels and wiring supplying the UPS and any data center devices not powered by the UPS |
| **UPS** | The UPS system including bypass and UPS paralleling gear. |
| **Generator** | The standby generator. This is modeled in the standby condition. Includes battery charging. Includes block, water, or fuel heaters if present. |
| **Critical Power Distribution** | Power distribution between the UPS and the load including breaker panels, wiring, outlet strips, and any transformers between the UPS and the load. Does not include panelboards and wiring to cooling and other devices not on the UPS, these are included in the Switchgear subsystem. |
| **Primary Auxillaries** | Auxillary devices located on the primary power bus. May include HVAC controls, actuators. |

(continued)

| Subsystem | Definition |
|---|---|
| **Critical Auxlliaries** | Auxillary devices located on the critical power bus. Typically includes control, security, management, and alarm systems for the data center. |
| **Lighting** | All lighting associated with the data center. May be powered from the primary or the critical bus. |
| **CRAH** | The devices generating conditioned air in a chilled water system. A fan-coil system with controls. Includes humidification whether internal or external to the device. |
| **CRAC** | The device generating air conditioning in a DX system. Typically includes compressor, reheat, and humidification. May be fully self contained with condenser, use a remote condenser, or reject heat via a glycol loop. |
| **CRAC w/o fan** | A CRAC in which the fan has been separately powered from the rest of the unit so that the fan can be powered from the Critical Power bus for uninterrupted operation. |
| **CRAC fan** | The fan of a CRAC that is equipped for separate powering. |
| **Ventilation** | Equipment that supplies fresh air to the data center. Includes fans, and, if present, any heaters, humidifiers and dehumidifiers associated with the fresh air ventilation system. |
| **Chiller** | Heat pump that supply cold water in a chilled water system. Does not include chillers with integrated heat rejection system. Does not include pumps. |
| **Air Cooled Chiller** | A chiller with integral heat rejection system, sometimes called "packaged chillers" Does not include chilled water pumps. |
| **Cooling Tower** | An outdoor heat rejection device the uses evaporation to assist heat rejection. Includes fans. |
| **Dry cooler** | An outdoor heat rejection device comprised of fan-coil units. Includes fans. |
| **Remote Condenser** | A device that reject heat to the outdoors in a DX air cooled system with remote condenser. May be either a remote condenser unit or a remote condensing unit. |
| **Chilled Water Pumps** | The pumps that circulate the chilled water in a chilled water cooling system. Includes both primary and secondary pumps. |
| **Heat Rejection Pumps** | The pumps that circulate glycol solutions and condenser water to the cooling tower or dry cooler. Not present in systems with air cooled chillers, or DX air cooled systems with remote condensing or remote condenser units. |

The list of definitions may be simplified considerably if a subsystem called "air conditioning," for example, is defined instead of defining the various subsystems, such as pumps, cooling towers, etc. There are at least two benefits in defining separate subsystems for devices. A first benefit is that data from an actual installation shows that there may be a significant and highly variable amount of inefficiency with the various cooling device types, and by creating separate subsystem types for devices, this allows for industry benchmarking of these subsystems so that users can get a better understanding of how the elements of their cooling system are performing compared to industry norms. A second benefit is that in many systems, some of the cooling devices, such as cooling towers and pumps, are shared with other non-data center loads and separating them from the air handlers allows one to model shared subsystems more effectively.

The model aggregates devices of related type into a single object, hereinafter referred to as a subsystem. That is, the model considers the system to be comprised of one UPS subsystem, one Generator subsystem, one CRAC subsystem, etc. However, in an actual data center, each subsystem may be comprised of multiple devices. For example, a 1MW data center may have three parallel 500kW UPS installed, and may have fifteen 90kW CRAC units installed. For purposes of energy management and benchmarking, our energy management system treats each subsystem as a single entity. Therefore, a way to aggregate the actual devices may be required.

In a certain embodiment, aggregation of a number of devices into a subsystem in the model may be accomplished using the following method: (1) the aggregate subsystem nameplate rating is the sum of the device nameplate power ratings in KW; (2) the aggregate subsystem usable power rating is the sum of the device usable power ratings in KW, adjusted for device redundancy within the subsystem; and (3) the aggregate no-load, proportional and square-law loss factors for the subsystem is the same as the corresponding loss factors of the individual device, if the devices are the same.

When considering the aggregate subsystem power rating, if the devices are configured in a dual path system, the subsystem usable capacity is only half of the sum of the device usable capacities. If the devices are configured in N+1 configuration, then the subsystem usable capacity is N/(N+1) times the sum of the device usable capacities. If the subsystem is configured for both N+1 and dual path redundancy, then the subsystem usable capacity is one-half of N/(N+1) times the sum of the device usable capacities. Other specialized redundancy options such as "ring" or "catcher" designs can have the subsystem usable capacity deduced by inspection. If the devices being aggregated are not the same, then the aggregate loss factors are the weighted average of the device loss factors, weighted by the fraction of the total usable capacity each device represents.

To determine the weighted averages, each loss factor is weighted in the average calculation according to the fraction of the total PU represented by the devices exhibiting that factor. For most data centers, only a single type of device is used within a subsystem, so no weighted average is needed. For example, in virtually all cases, a parallel group of UPSs is the same product model. The weighted average method is needed only in the cases where the devices within a subsystem are mixed.

Redundancy configurations may be handled separately for each subsystem, and not at the data center level. Actual data centers may apply redundancy very differently to different device types. For example, a data center may have 2N UPS, N+1 pumps, and a non-redundant cooling tower. Many other redundancy combinations may be observed in actual data centers. By addressing redundancy separately for each device type, the model can be simple but highly flexible. By addressing redundancy within the subsystem, redundancy may be eliminated as a variable when the interconnection of the data center subsystems is considered, thereby allowing the reduction of the number of configuration options when combining subsystems into data centers. The types of redundancy the model allows at each subsystem are: N; N+1; N+2; 2N; and 2N+1. It should be noted that redundancy values may only be meaningful for device types that are subjected to a load, and therefore do not apply for subsystems like lighting or auxiliaries.

For other devices other than UPSs, such as air conditioners, there may be a greater discrepancy between the usable capacity versus the nameplate capacity. These capacity considerations are comprehended in the five-parameter device model. However, when devices are combined into a data center system, care must be given to describing capacity and load ratings. When defining the data center load capacity rating, other equivalent terms, such as "data center power rating," "data center load rating," or "data center kW capacity," may be employed. With one embodiment, this capacity rating may be defined as the maximum value of IT load that the data center is designed and built to support. When defining the data center load capacity, several issues should be addressed. For example, a data center may have 2MW of IT load electrical power capacity but only 1MW of cooling capacity. From different perspectives, people might view this as either a 2MW or a 1MW data center. However, for the purposes of this embodiment, subsystem limits to the IT load establishes the data center load rating. In this example, the data center rating would be 1MW.

Another example is a data center that may be drawing 2MW of power from the electrical mains connection. From some perspectives, this might be viewed as a 2MW data center. However, the data center rating may be defined from the point of view of the IT load capacity, and a data center drawing 2MW of mains power is typically only providing less than 1MW of IT load. Also, the mains draw at a particular point in time does not reveal anything about the ultimate capacity of the data center.

Yet another example is a data center that may have 1MW of rated electrical power capacity and much more than 1MW of cooling capacity. However, the system design or policy may prescribe a 15% safety margin. The data center is therefore only designed for 85% of 1MW or 850KW of usable capacity. The load capacity rating of the data center is therefore 850KW.

A further example is a data center that was designed for 5MW but not all of the equipment was installed. Only a single 1MW UPS is installed, and the installation of 4 other 1MW UPS may be deferred. In this case, the data center as-built today is only 1MW in rated capacity and therefore the rated load for purposes of efficiency analysis is 1MW. The data center is easily upgradeable to 5MW but is not a 5MW data center.

A concept that may be used in the data center model may be that of expressing power and loads as a percent of the rated IT load. In this way, the model may be "normalized" and various computations are simplified and made independent of the KW capacity. The rated IT load of the data center may be defined to be equal to 100% or "1 Per-Unit" and express loads and capacities in Per-Unit ratings. For example, a 1MW rated load data center that has a 2MW nameplate rating UPS installed would be said to have 2.0 Per-Unit UPS rating.

It may appear that the aggregate power rating for each subsystem is the same as the IT load. That is, it appears that a 1MW rated data center should have 1MW of UPS, 1MW of PDU, 1MW of CRAC, 1MW of chiller, etc. However, in most applications, this is not true. In fact, the subsystem power ratings may be found to be much larger than the IT load in many cases. This is a concept that can be best illustrated by practical examples. Table 5 shows typical data center subsystems and a common range for their PU ratings.

*Table 5* - *The various data center subsystems with typical rated PU ranges*

| Subsystem | System PU range | Explanation |
|---|---|---|
| **Switchgear** | **2-6** | The switchgear must supply all of the losses of the data center in addition to the IT load. Furthermore there may be a dual path system, doubling the PU rating. |
| **UPS** | **1.2-3.2** | The UPS must supply the PDU losses and sometimes is configured to supply air handler fans and pumps. Furthermore a safety margin of 15% or more is typically specified. |
| **Generator** | **2-10** | The generator must supply all of the data center losses in addition to the IT load Furthermore there may be a 2N or even 2N+1 system, doubling the PU rating. For motor starting, a safety margin may also be specified. |
| **PDU** | **2-20** | PDUs are almost always over-provisioned based on branch circuit count or zone requirements. Furthermore there may be a dual path system, doubling the PU rating. |
| **Distribution Wiring** | **4-40** | Wiring is sized for safety and typically is underutilized due to load diversity. Furthermore there may be a dual path system, doubling the PU rating. |
| **CRAHICRAC** | **1.8-8** | Air handlers must process heat from the power system and lighting in addition to the IT load. Also, CRAC are typically not operated at ideal rated conditions which requires over sizing. Poor room design causes bypass and recirculation airflows that must be compensated for by over sizing. Furthermore there may be a 2N or even 2N+1 system, doubling the PU rating. |
| **Chiller** | **2-5** | Chillers must process heat from all power and cooling devices in the data center as well as the IT load. Also, chillers must be sized to operate over a wide range of outdoor conditions which requires over sizing. Furthermore there may be a N+1, 2N or even 2N+1 system, increasing the PU rating. Finally, if the system includes time shifting of the cooling load, the chiller may need to be oversized to accommodate thermal storage. |
| **Cooling Tower / Dry cooler** | **2-5** | Chillers must process heat from all power and cooling devices in the data center as well as the IT load. Also, chillers must be sized to operate over a wide range of outdoor conditions which requires over sizing. Furthermore there may be a N+1, 2N or even 2N+1 system, increasing the PU rating. Finally, if the system includes time shifting of the cooling load, the tower may need to be oversized to accommodate thermal storage. |
| **Chilled Water Pumps** | **2-10** | The pumps must be sized to accommodate the CRAH load. Furthermore, many systems have a primary/secondary loop system that creates additional energy use. Furthermore there may be a N+1, 2N or even 2N+1 system, increasing the PU rating. |
| **Heat Rejection Pumps** | **2-5** | Pumps must be sized to accommodate the coolling tower. |
| **Lighting** | **0.2-5** | Light is not directly related to the IT load. For the model, we establish a 1PU lighting system to be 2% of the IT load following industry norms. The actual PU can be higher if the data center operates at low density, and can be lower if the site operates with very high density with high efficiency lighting. |

As shown in Table 5, the nameplate sizing of many subsystems may be much larger than the IT load rating of the data center. Since many data centers operate at an actual load that is only a fraction of the rated load, the data center subsystems in actual data centers may be operating at only a tiny fraction of their nameplate rating. For example, if a 1MW rated data center has 5MW of PDUs installed but is only running at 300kW or 30% of its rated load, then the PDU subsystem is only operating at 0.2 x 0.3 or 6% of its nameplate rating. This general finding that devices may be operated below their nameplate power means that the fixed losses may become the dominant contributors to data center losses in many actual data centers.

The aggregation method described herein may be shown to be mathematically exact, under the condition that all devices within a subsystem type share the load equally. While for some device types, such as UPSs, this condition may be typically met, for other device types, such as PDUs, this condition may not met because the power flows through different PDU units in the same data center vary considerably. Therefore, the aggregate model is only an exact representation of the combined devices when the power flows are balanced among the devices in the subsystem. However, it may be shown that the model is always exact for the losses associated with the fixed and proportional losses, even when the energy flows are not balanced. All of the error is contained in the square-law loss term. For almost all actual data center systems, the error caused by the aggregated square-law term is very small. The error is zero if the energy flows are balanced across the devices within the subsystem type. The error is very small if the square-law loss term is small compared with the other loss terms. The error is very small if the load is small compared with the PU system rating, because the square-law losses fall with the square of the load. The aggregated model therefore contributes a very small error when compared with a model that includes every single device, typically much less than 0.5% in DCiE. Therefore, the energy management system disclosed herein may employ the aggregated model for each subsystem, but consideration must be made to quantify the potential error caused by aggregation.

Once the parameters of the standardized subsystems are established, the subsystems may be combined to obtain a model for the complete data center. The complete data center model may be used to determine what thermal or electrical loads are applied to the various subsystems in order to establish the subsystem operating conditions. Then the model may combine the electrical energy consumptions of the subsystems in a way that matches the data center to be modeled.

Virtually all data centers may follow a basic standard architecture with regard to how the subsystems are interconnected, with only minor variations. For example, the IT load may be powered from the PDU, which is powered by the UPS, which is supplied by the switchgear, and so on. Most of the differences between data centers, such as how and where redundancy exists, relate to how the subsystems are made up of devices, and not how the subsystems are interconnected. Given a list of standard subsystems, an ideal goal would be to make an exhaustive catalog of all alternative data center configurations. In this way, separate models for every type of data center may be pre-constructed and tested.

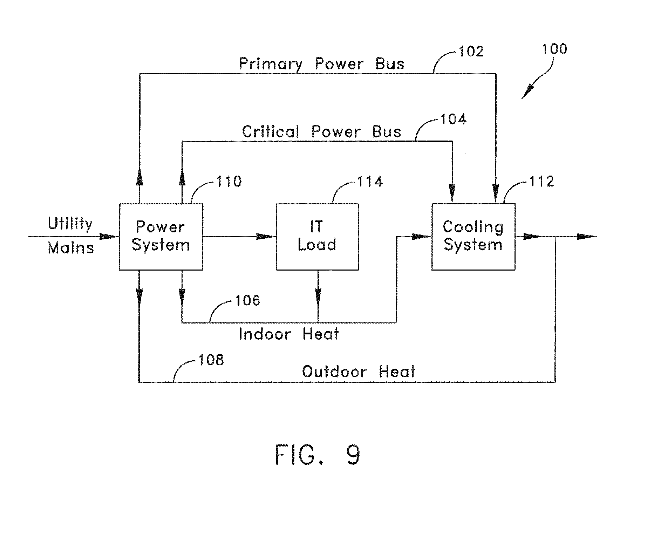

In one embodiment, a framework for describing separate data center designs is generally indicated at 100 in FIG. 9. As shown, two main electric power buses 102, 104 and two main heat busses 106, 108 are identified. The primary power bus 102 may be a switchgear and panel board electrical supply, and the critical power bus 104 may be the UPS output. Standard subsystems in the model are powered from one or the other of these busses. The indoor heat bus 106 includes all heat exhausted indoors, and the outdoor heat bus 108 represents where heat is exhausted to the outdoors. Every device creates heat that must go onto one of the heat busses. The data center system may be split into two major groups of subsystems, the power system 110 and the cooling system 112. As shown, the power system 112 supplies power to an IT load 114. From this, two catalogs may be created - a power system catalog and a cooling system catalog. Splitting the description into separate entries for power and cooling systems, instead of having a single data center catalog, may reduce the number of catalog entries by approximately a factor of five. Further, the provision of two catalogs may reduce the complexity of handling interactions of various power and cooling combinations as well as simplify the addition of future data center power and cooling configurations.

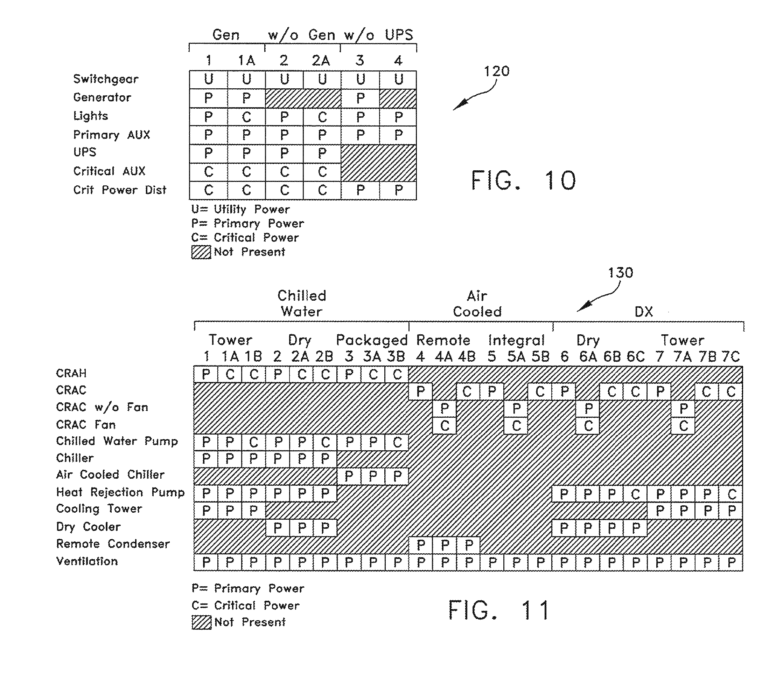

An exemplary standard power catalog for data centers is generally indicated at 120 in FIG.10. The catalog 120 shows that there are only six different catalog entries in the data center power catalog. Each column in the chart is a catalog entry. The standard power subsystems are listed in the rows. For a catalog entry, each power subsystems may be connected to the utility power, the primary power, critical power, or it may not be present. The above catalog 120 represents known data centers. Redundancies may be handled within the subsystem models and are not revealed at this level of the model.

An exemplary standard cooling catalog for data centers is generally indicated at 130 in FIG. 11. The catalog 130 shows twenty-three different catalog entries in the data center cooling catalog. When combined with the six entries from the power catalog, twenty-nine catalog entries are obtained to describe any data center. These catalogs are easily extendable if new subsystem types or topologies are introduced.

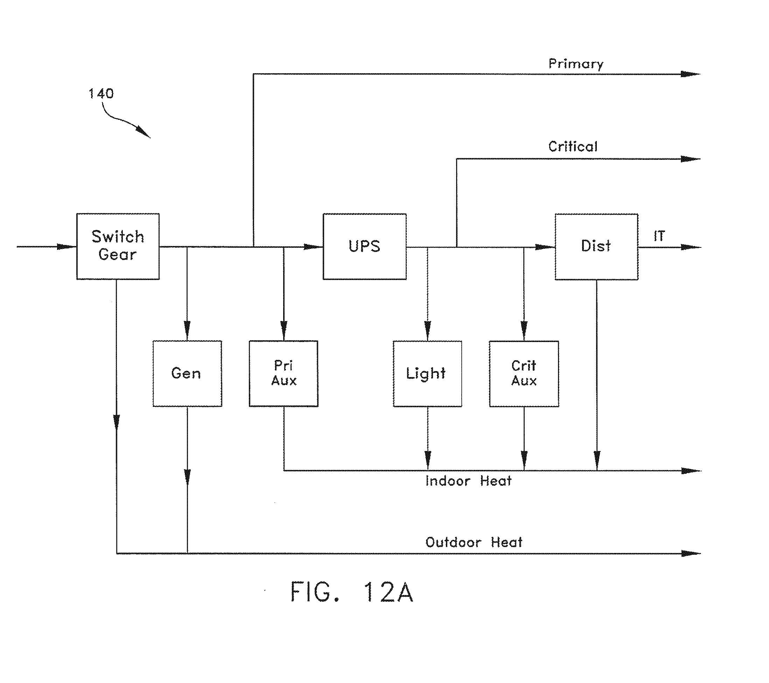

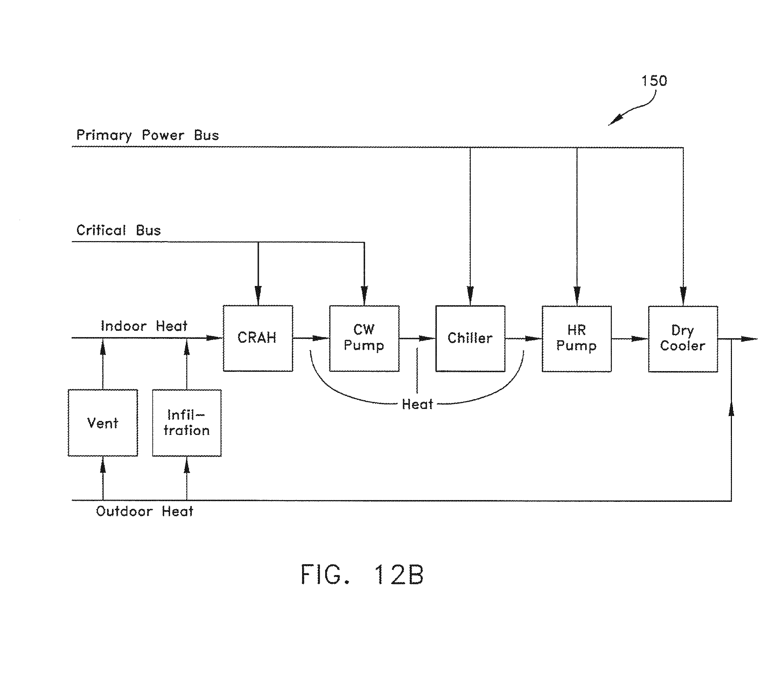

To describe a data center using the catalog, it is only necessary to specify the power system and the cooling system entries. For example, when considering an exemplary data center described as "Power system type 1A, Cooling system type 2B," using the tables from FIGS. 10 and 11, one-line energy flow diagrams for this data center, which is illustrated in FIGS. 12A and 12B. FIG. 12A illustrates the power system one-line energy flow, which is generally indicated at 140. FIG. 12B illustrates the cooling system one-line energy flow, which is generally indicated at 150. The values of energy flow in the example diagram of FIG. 12A start with IT load demand and outdoor conditions, which give rise to a complex process of energy flows through the data center subsystems that ultimately result in an electrical demand at the utility mains and a heat flow to the outdoors. This flow of energy, starting with the demand and working back to the supply, at first appears backwards from the common concept that energy flows from the mains supply through the data center. While it is true that the energy is supplied by the mains utility, the amount of energy used is not determined by the utility, it is established from the demand. In the case of the data center, the demand begins with the IT load, which gives rise to a demand on power and cooling devices, which in turn give rise to electrical demands by those devices, and these electrical demands cascade and ultimately add together to establish the amount of energy used by the data center.

As shown in FIG. 12B, the diagram illustrates the indoor heat contributor block as "Infiltration." This block is not a data center subsystem, but represents heat leakage between the indoors and outdoors of the data center and is present in all data centers. Infiltration is modeled as a heat flow driven by the temperature difference between indoors and outdoors, and adds to or subtracts from the thermal load on the air conditioning system.

Some data centers do not have a uniform or single design, but may have a basic design that varies by zones. For example, a data center may be configured to have a zone supplied by room cooling and another zone supplied by row cooling. Another example may be configuring the data center so it is cooled by a mix of chilled water and DX cooling units. It may be desirable to separate these zones for reporting purposes, for example, to compare the efficiency performance of different zones. In this case, the zones may be treated like separate data centers from an energy management system perspective, and then the data aggregated to obtain total values. Energy management system software may be designed to support multi-design, or separate instances of the software may be operated and then an aggregation function may be used to combine the data.

For data centers where it is not practical or feasible to separate the zones, for example, where two types of cooling applications are used in the same data center. The mixture of technology may be modeled by including more than one catalog design in the data center and partitioning the heat load between them. The heat load may be apportioned by assigning a fixed Watt value to a specific cooling system, by assigning specific percentage fractions of the load to each cooling system, or by measuring the actual heat flows in the different cooling systems. For combinations of cooling systems that share a standard catalog entry, such as a mix of in-row and room cooling using a common chiller plant, a single catalog model may be used and the combination of row and room cooling is done in the subsystem model.

The energy flow one-line diagram for a data center as described herein may be presented to users with the instantaneous power flows and capacity utilization of the various subsystems displayed. In theory, all of this information could be directly measured and displayed in an energy monitoring system for an actual data center. In this case, no calculation is required. However, this approach cannot be used to study the performance of a data center that has not been built, or the performance of a data center operated at operating conditions other than the conditions of the actual data center at the time of measurement. The model is necessary for this purpose. Also, in most data centers, it is not possible to actually instrument all of the energy flows and device power draws and the model can be used to accurately estimate the missing data. Therefore, a means to use the model to calculate the power and heat flows in the energy flow one-line diagram is required.

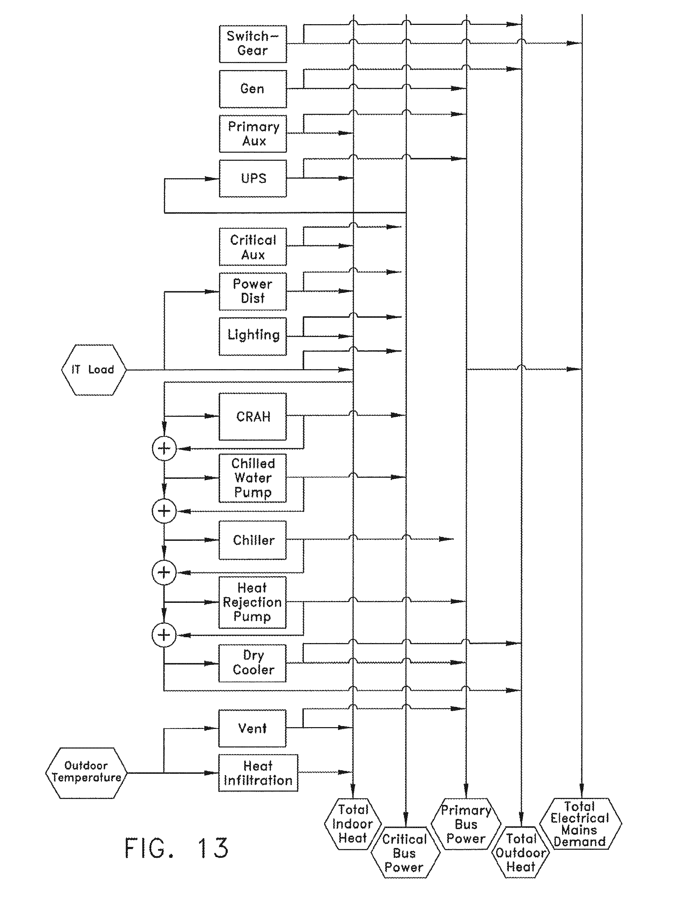

Given subsystem models are aggregated from the device models, a connection and sequence of calculations may be needed to obtain the power and heat flows. As described, the calculations may begin with the IT load as an input, and end with the utility mains power draw and the outdoor heat exhausted as the outputs. The flow of the calculations is described by the model evaluation flow diagram of FIG. 13, which shows a sample model evaluation flow diagram for the data center type "Power 1A, Cooling 2B," as described above.

To evaluate the model using the diagram, the flow begins on the left with the IT load and outdoor temperature. Each subsystem model may be evaluated as its load input becomes available. Some devices can be evaluated immediately, such as the subsystems with no load inputs, such as the generator, and subsystems where the load is provided immediately, such as the power distribution subsystem. The UPS subsystem cannot be evaluated until all the devices feeding its load input are evaluated (the critical bus). The cooling-related subsystems cannot be evaluated until the total indoor heat bus is evaluated by summing its inputs. The cooling system is evaluated by subsystem starting with the CRAC unit which then completes the load input for the chilled water pumps. The total outdoor heat and the total electrical mains demand are computed when all of the subsystems are evaluated.

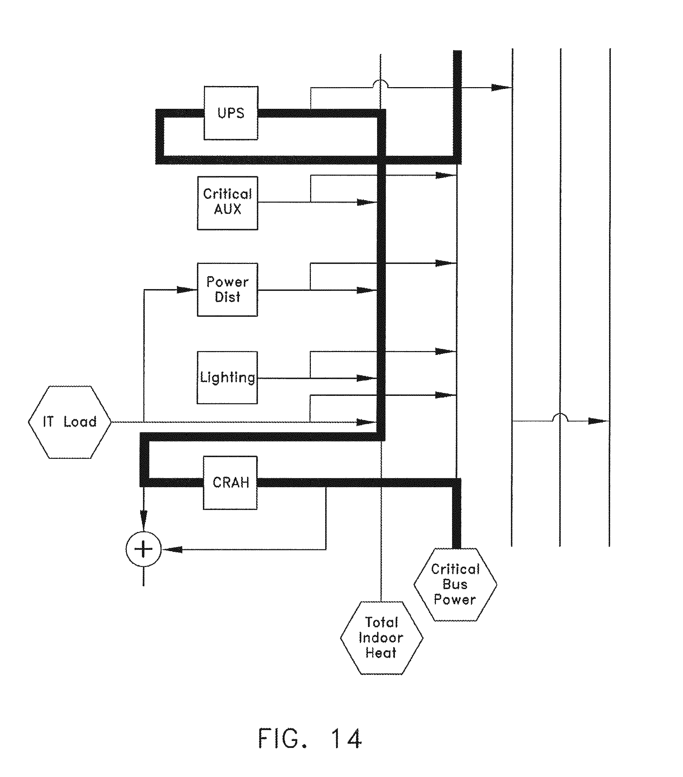

The model illustrated in FIG. 14 is an example of a data center with circular energy flow. As shown, the critical bus goes to the input of the UPS. Next, the output heat of the UPS goes to the indoor heat bus. Next, the indoor heat bus goes to the CRAH. And finally, the CRAH electrical load goes to the critical bus, and back to the beginning of the loop. If the CRAH was on the primary bus this loop would not exist. The circular energy flow in the example is highlighted in FIG. 14. Another example of circular energy flows is where the switchgear losses are internal to the building and are processed by the CRAH.

Circular energy flows in a model may be solved by mathematical techniques, such as solving differential equations or using a convergence solver. In most instances, it is found that for all realistic scenarios this gives rise to a negligible error. Thus, circular energy flow may be eliminated by providing an estimate of the device load per unit rated system load, which may be used to estimate the device loss. By using an estimate instead of the true value, the calculations have no circular formula references. This drastically simplifies the calculations since the error created using the estimate value is second order and very small. Also, there are only a few types of circular calculations where it is a factor, so only a few devices require an estimate.

Circular energy flows are a property of the power and cooling systems selected from the catalog. For each catalog model that has a circular energy flow, the method of breaking the circulation must be defined and built into the model as a modification. This problem can be explicitly solved for each catalog data center model that has circular energy flows.

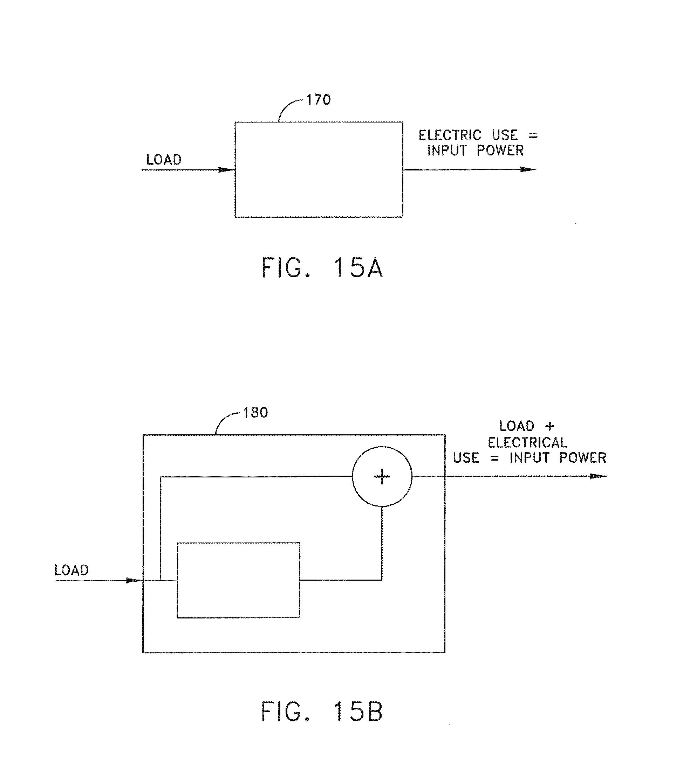

The energy flow diagram and the model evaluation flow diagram may be related but do not match. The energy flow diagram best represents the physical interconnections of subsystems in the data center. The evaluation flow diagram represents the flow of the computations used to evaluate the data center model. A comparison of the diagrams illustrates that the energy flow diagram matches the model evaluation flow diagram for many subsystems, like lighting and air conditioners. However, for devices that transform electrical power, the energy flow diagram and the one-line diagram do not match as shown in FIGS. 15A and 15B, which illustrate the relation between the energy flow diagram and the model evaluation flow diagram for two different types of devices 170, 180.

The simple device model shown in FIG. 15A accepts a load and computes electrical use for device 170. This model works for devices that have a single electrical power connection, like air conditioners, pumps, and lights.

The model of FIG. 15B represents the energy flow model for devices, e.g., device 180, that process electrical power, such as UPSs, PDUs, wiring, and transformers. The device model in the smaller inner box in this diagram takes the load input and computes the electric use. However, the electric use for this type of device does not appear at any physical electrical connection. The physical input power connection to these types of devices is the sum of the electrical use and the load. For example, a 1 MW transformer with 1 MW of load may have a power consumption (loss) of 2% or 20 KW. The physical input power to the transformer in this case would be 1.02 MW and the output would be 1 MW. There is no connection on the transformer where the 20 kW of loss can be directly measured. The difference between the physically measured input and output powers must be measured in order to get the energy use.

In an energy management system, the energy use and heat output of each subsystem type may be measured. In some cases, such as devices of the type described herein, power metering devices may be installed on a circuit to obtain the energy use for that device. However, for devices that transform electrical power, there is no circuit that can be measured to obtain the device energy use, and instead the difference between two physical measurements must be taken to obtain the device energy use. For this reason, physical instrumentation installed in an actual data center may not exactly correspond to the expected data, and some computations or mapping of the physical instrumentation points to the data center model is required.

It should be observed that a systematic method for modeling the energy use of data centers is described herein. The model starts with the properties of the individual devices, and then provides a process to combine them into standardized subsystems, and then to further combine the subsystems into a whole data center.

The methods and systems disclosed herein may be used to identify why a data center is not performing to the design, project future performance of a data center, and project the performance under alternate scenarios in order to help data center operators reduce energy use.

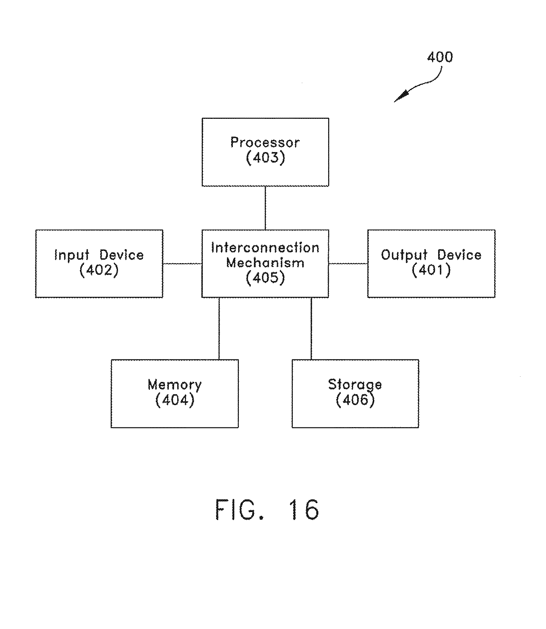

The above defined methods, according to embodiments of the disclosure, maybe implemented on one or more general-purpose computer systems. For example, various aspects of the disclosure may be implemented as specialized software executing in a general-purpose computer system 400 such as that shown in FIG. 16. Computer system 400 may include one or more output devices 401, one or more input devices 402, a processor 403 connected to one or more memory devices 404 through an interconnection mechanism 405 and one or more storage devices 406 connected to interconnection mechanism 405. Output devices 401 typically render information for external presentation and examples include a monitor and a printer. Input devices 402 typically accept information from external sources and examples include a keyboard and a mouse. Processor 403 typically performs a series of instructions resulting in data manipulation. Processor 403 is typically a commercially available processor such as an Intel Pentium, Motorola PowerPC, SGI MIPS, Sun UltraSPARC, or Hewlett-Packard PA-RISC processor, but may be any type of processor. Memory devices 404, such as a disk drive, memory, or other device for storing data is typically used for storing programs and data during operation of the computer system 400. Devices in computer system 400 may be coupled by at least one interconnection mechanism 405, which may include, for example, one or more communication elements (e.g., busses) that communicate data within system 400.

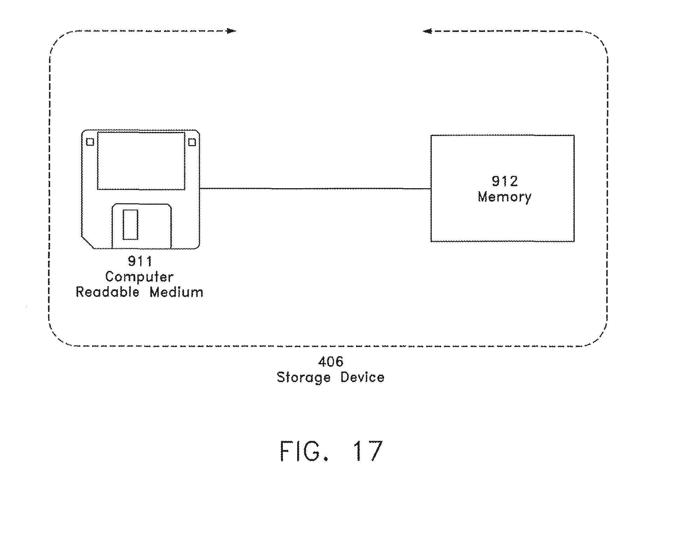

The storage device 406, shown in greater detail in FIG. 17, typically includes a computer readable and writeable nonvolatile recording medium 911 in which signals are stored that define a program to be executed by the processor or information stored on or in the medium 911 to be processed by the program. The medium may, for example, be a disk or flash memory. Typically, in operation, the processor causes data to be read from the nonvolatile recording medium 911 into another memory 912 that allows for faster access to the information by the processor than does the medium 911. This memory 912 is typically a volatile, random access memory such as a dynamic random access memory (DRAM), static memory (SRAM). Memory 912 may be located in storage device 406, as shown, or in memory device 404. The processor 403 generally manipulates the data within the memory 404, 912 and then copies the data to the medium 911 after processing is completed. A variety of mechanisms are known for managing data movement between the medium 911 and the memory 404, 912, and the disclosure is not limited thereto. The disclosure is not limited to a particular memory device 404 or storage device 406.

Computer system 400 may be implemented using specially programmed, special purpose hardware, or may be a general-purpose computer system that is programmable using a high-level computer programming language. For example, computer system 400 may include cellular phones and personal digital assistants. Computer system 400 usually executes an operating system which may be, for example, the Windows 95, Windows 98, Windows NT, Windows 2000, Windows ME, Windows XP, Windows Vista or other operating systems available from the Microsoft Corporation, MAC OS System X available from Apple Computer, the Solaris Operating System available from Sun Microsystems, or UNIX operating systems available from various sources (e.g., Linux). Many other operating systems may be used, and the disclosure is not limited to any particular implementation. For example, an embodiment of the present disclosure may instruct data center resource providers to restrict access to network devices using a general-purpose computer system with a Sun UltraSPARC processor running the Solaris operating system.

Although computer system 400 is shown by way of example as one type of computer system upon which various aspects of the disclosure may be practiced, it should be appreciated that the disclosure is not limited to being implemented on the computer system as shown in FIG. 16. Various aspects of the disclosure may be practiced on one or more computers having a different architecture or components than that shown in FIG. 16. To illustrate, one embodiment of the present disclosure may receive network device provisioning requests using several general-purpose computer systems running MAC OS System X with Motorola PowerPC processors and several specialized computer systems running proprietary hardware and operating systems.

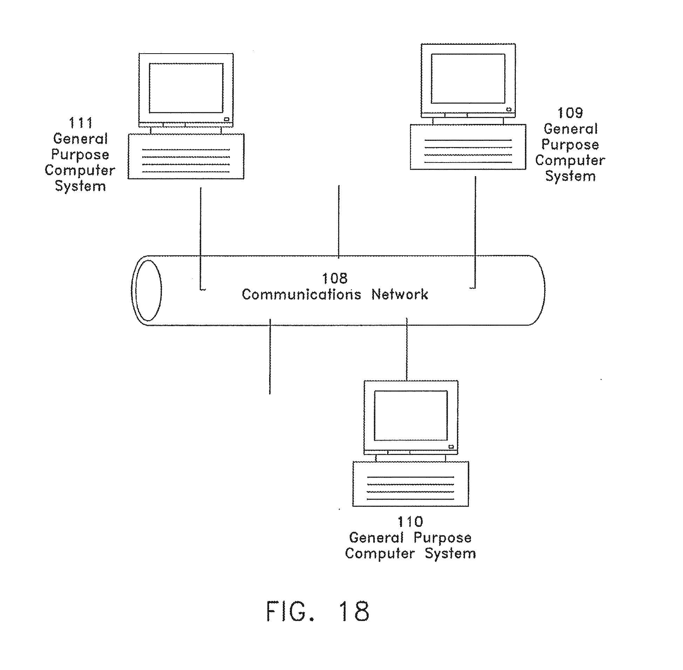

As depicted in FIG. 18, one or more portions of the system may be distributed to one or more computers (e.g., systems 109-111) coupled to communications network 108. The physical media used in communications network 108 may include any known in the art, such as, for example, physical cabling and/or wireless technology (e.g. RF, Infrared, etc...). Moreover, each physical medium may comply with various standards such as, for example, CAT 5 cabling standard or IEEE 802.11, Bluetooth and Zigbee wireless standards. The computer systems 109-111 may also be general-purpose computer systems. For example, various aspects of the disclosure may be distributed among one or more computer systems configured to provide a service (e.g., servers) to one or more client computers, or to perform an overall task as part of a distributed system. More particularly, various aspects of the disclosure may be performed on a client-server system that includes components distributed among one or more server systems that perform various functions according to various embodiments of the disclosure. These components may be executable, intermediate (e.g., IL) or interpreted (e.g., Java) code which communicate over a communication network (e.g., the Internet) using a communication protocol (e.g., TCP/IP). To illustrate, one embodiment may display network device provisioning request status information though a browser interpreting HTML forms and may retrieve data center resource provider information using a data translation service running on a separate server.

Various embodiments of the present disclosure may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the disclosure may be implemented in a non-programmed environment (e.g., documents created in HTML, XML or other format that, when viewed in a window of a browser program, render aspects of a graphical-user interface (GUI) or perform other functions). Various aspects of the disclosure may be implemented as programmed or non-programmed elements, or any combination thereof. For example, a provisioning policy user interface may be implemented using a Microsoft Word document while the application designed to manage provisioning requests may be written in C++.

It should be appreciated that a general-purpose computer system in accord with the present disclosure may perform functions outside the scope of the disclosure. For instance, aspects of the system may be implemented using an existing commercial product, such as, for example, Database Management Systems such as SQL Server available from Microsoft of Seattle WA., Oracle Database from Oracle of Redwood Shores, CA, and MySQL from MySQL AB of UPPSALA, Sweden and WebSphere middleware from IBM of Armonk, NY. If SQL Server is installed on a general-purpose computer system to implement an embodiment of the present disclosure, the same general-purpose computer system may be able to support databases for sundry applications.

Based on the foregoing disclosure, it should be apparent to one of ordinary skill in the art that the disclosure is not limited to a particular computer system platform, processor, operating system, network, or communication protocol. Also, it should be apparent that the present disclosure is not limited to a specific architecture or programming language.

Having thus described at least one illustrative embodiment of the disclosure, various alterations, modifications and improvements will readily occur to those skilled in the art. Such alterations, modifications and improvements are intended to be within the scope and spirit of the disclosure. Accordingly, the foregoing description is by way of example only and is not intended as limiting. The disclosure's limit is defined only in the following claims and the equivalents thereto.

**Claims**

1. A method of modeling power efficiency of a data center comprising:

   identifying devices used in the data center that draw power;
   for each device, selecting one of a rated capacity and a usable capacity for a power input of the device; and
   for each device, determining whether the device contributes as a fixed loss, a proportional loss, or a square-law loss, or a combination thereof.

2. The method of claim 1 further comprising aggregating power losses of the devices to obtain a subsystem loss.

3. The method of claim 2 further comprising aggregating power losses of the subsystems to obtain a data center loss.

4. The method of claim 1, wherein the devices are characterized as power-related devices and cooling-related devices.

5. The method of claim 1, further comprising identifying causes of losses other than from devices, and predicting the amount of loss from statistical data.

6. The method of claim 1 further comprising
   providing a data center catalog including a majority of data center configurations, the data center catalog having a power catalog of exemplary power configurations and a cooling catalog of exemplary cooling configurations, and combining the power catalog and the cooling catalog to create a data center configuration.

7. The method of claim 1 further comprising simplifying the calculations for circular dependencies in the model.

8. A method of modeling power efficiency of a data center comprising:

   measuring a power input into the data center;
   measuring power loads in the data center; and
   measuring cooling loads in the data center.

9. The method of claim 8, wherein measuring the power loads includes measuring the loads of UPSs and PDUs.

10. The method of claim 8, wherein measuring the cooling loads in the data center includes measuring loads generated by at least one of CRAH, CRAC, fan, chiller unit, ventilation unit, cooling tower, and pumps.

11. The method of claim 8 further comprising measuring environmental conditions of the data center.

FIG. 1

FIG. 2

FIG. 3

FIG. 4

FIG. 5

FIG. 6

FIG. 7A

| APC MGE | Statement of Work | Data Center Electrical Efficiency Assessment |
| --- | --- | --- |
| | Professional Services | Service |

## 1.0 Executive Summary

The Data Center Electrical Efficiency Assessment provides an analysis of the Power and Cooling systems to determine the operating efficiency of the complete system. In addition, the system is benchmarked against the expected values of efficiency based on the inherent design, and against other similar data centers. The projected efficiency under changing IT loads such as a growth plan, is calculated.

Our service professionals will provide an accurate assessment of the factors that are limiting the achievable efficiency of the data center and will make recommendations for changes to maximize efficiency. This will include:

- Assessment and analysis of the data center's as-built electrical efficiency
- Breakdowns of losses into power. cooling, and lighting losses
- Breakdown of the cooling system losses into CRAH, humidification, and outdoor heat rejection losses.
- Breakdown of the power system losses into UPS and power distribution.
- Comparing the actual efficiency to the efficiency that should be expected based on the design, and identifying any constraints that are preventing the system for achieving its expected efficiency
- Detailed recommendations for improving the efficiency of the data center, taking into consideration the constraints of the facility

## 2.0 Features & Benefits

| Features | Benefits |
| --- | --- |
| Comprehensive data center | Reports efficiency values for the data center. Identifies inefficient |

**Table of Contents**

1.0 Executive Summary

2.0 Features & Benefits

3.0 Details of Service

4.0 Deliverables

5.0 Assumptions

6.0 Scope of Responsibility

7.0 Project Work Details

8.0 Pricing

9.0 Terms & Conditions

## FIG. 7B

FIG. 8

FIG. 9

EP 2 546 771 A2

**FIG. 10**

|                 | Gen | | w/o Gen | | w/o UPS | |
|-----------------|---|----|---|----|---|---|
|                 | 1 | 1A | 2 | 2A | 3 | 4 |
| Switchgear      | U | U | U | U | U | U |
| Generator       | P | P | ▨ | ▨ | P | ▨ |
| Lights          | P | C | P | C | P | P |
| Primary AUX     | P | P | P | P | P | P |
| UPS             | P | P | P | P | ▨ | ▨ |
| Critical AUX    | C | C | C | C | ▨ | ▨ |
| Crit Power Dist | C | C | C | C | P | P |

U= Utility Power
P= Primary Power
C= Critical Power
▨ Not Present

**FIG. 11**

Chilled Water — Tower (1, 1A, 1B), Dry (2, 2A, 2B), Packaged (3, 3A, 3B)
Air Cooled — Remote (4, 4A, 4B), Integral (5, 5A, 5B)
DX — Dry (6, 6A, 6B, 6C), Tower (7, 7A, 7B, 7C)

| | 1 | 1A | 1B | 2 | 2A | 2B | 3 | 3A | 3B | 4 | 4A | 4B | 5 | 5A | 5B | 6 | 6A | 6B | 6C | 7 | 7A | 7B | 7C |
|---|---|---|---|---|---|---|---|---|---|---|---|---|---|---|---|---|---|---|---|---|---|---|---|
| CRAH | P | C | C | P | C | C | P | C | C | | | | | | | | | | | | | | |
| CRAC | | | | | | | | | | P | | C | P | | C | P | | C | C | P | | C | C |
| CRAC w/o Fan | | | | | | | | | | | P | | | P | | | P | | | | P | | |
| CRAC Fan | | | | | | | | | | | C | | | C | | | C | | | | C | | |
| Chilled Water Pump | P | P | C | P | P | C | P | P | C | | | | | | | | | | | | | | |
| Chiller | P | P | P | P | P | P | | | | | | | | | | | | | | | | | |
| Air Cooled Chiller | | | | | | | P | P | P | | | | | | | | | | | | | | |
| Heat Rejection Pump | P | P | P | P | P | P | | | | | | | | | | P | P | P | C | P | P | P | C |
| Cooling Tower | P | P | P | | | | | | | | | | | | | | | | | P | P | P | P |
| Dry Cooler | | | | P | P | P | | | | | | | | | | P | P | P | P | | | | |
| Remote Condenser | | | | | | | | | | P | P | P | | | | | | | | | | | |
| Ventilation | P | P | P | P | P | P | P | P | P | P | P | P | P | P | P | P | P | P | P | P | P | P | P |

P= Primary Power
C= Critical Power
▨ Not Present

FIG. 12A

EP 2 546 771 A2

150

Primary Power Bus

Critical Bus

Indoor Heat → CRAH → CW Pump → Chiller → HR Pump → Dry Cooler

Heat

Vent     Infil-
         tration

Outdoor Heat

FIG. 12B

FIG. 13

FIG. 14

FIG. 15A

FIG. 15B

400

Processor
(403)

Input Device
(402)

Interconnection
Mechanism
(405)

Output Device
(401)

Memory
(404)

Storage
(406)

FIG. 16

911
Computer
Readable Medium

912
Memory

406
Storage Device

FIG. 17

111
General
Purpose
Computer
System

109
General
Purpose
Computer
System

108
Communications Network

110
General Purpose
Computer System

FIG. 18